# EUROPÄISCHE PATENTSCHRIFT

(11) **EP 3 374 170 B1**
(45) Veröffentlichungstag und Bekanntmachung des Hinweises auf die Patenterteilung: **29.01.2025**
(21) Anmeldenummer: 16801129.4
(22) Anmeldetag: 07.11.2016
(51) Int. Cl.: B29D 11/00, B24B 13/00, B24B 27/00

(54) **VERFAHREN, ANLAGE UND SYSTEM ZUR BEARBEITUNG OPTISCHER LINSEN**
METHOD, INSTALLATION, AND SYSTEM FOR MACHINING OPTICAL LENSES
PROCÉDÉ, INSTALLATION ET SYSTÈME POUR LE TRAITEMENT DE LENTILLES OPTIQUES

(30) Priorität: 12.11.2015 DE 102015014580; 24.11.2015 DE 102015015040
(43) Veröffentlichungstag der Anmeldung: 19.09.2018
(73) Patentinhaber: Schneider GmbH & Co. KG, 35112 Fronhausen (DE)
(72) Erfinder: SCHNEIDER, Gunter, 35037 Marburg (DE); HUTTENHUIS, Stephan, 35096 Niederweimar (DE)
(74) Vertreter: Von Rohr Patentanwälte Partnerschaft mbB
(86) Internationale Anmeldenummer: PCT/EP2016/001835
(87) Internationale Veröffentlichungsnummer: WO 2017/080639

(56) Entgegenhaltungen:
- WO-A2-2013/131656
- WO-A2-2013/131656
- DE-A1- 19 815 728
- DE-A1- 3 614 165
- US-A1- 2003 031 540
- US-A1- 2003 067 889
- US-A1- 2005 106 999
- US-A1- 2012 209 416
- US-A1- 2015 053 530
- "Modulo Line, Automated lens processing, intelligently combined", 5 June 2014 (2014-06-05), pages 1 - 4, XP002766329, Retrieved from the Internet <URL:http://www.schneider-om.com/fileadmin/schneider-om/pdf/Modulo_Line__06-2014__web.pdf> [retrieved on 20170119]

## Beschreibung

Die vorliegende Erfindung betrifft ein Verfahren zur Bearbeitung vorzugsweise optischer Werkstücke gemäß dem Oberbegriff des Anspruchs 1, eine Anlage zur Bearbeitung vorzugsweise optischer Werkstücke gemäß dem Oberbegriff des Anspruchs 8 sowie ein System zur Bearbeitung vorzugsweise optischer Werkstücke gemäß dem Oberbegriff des Anspruchs 12.

Die Bearbeitung von optischen Werkstücken, wie Linsen, erfolgt in mehreren Schritten bzw. in mehreren separaten Bearbeitungseinrichtungen. Die Bearbeitung kann insbesondere ein Blocken, Fügen oder sonstiges (temporäres) Verbinden, wie Kleben mit Klebeband, ein Verzögern, Zwischenspeichern oder Sortieren bzw. Stacken, eine formgebende oder spanende Bearbeitung, ein Polieren, ein Beschichten, ein Prüfen bzw. Messen, ein Markieren, ein Beschichten und/oder ein Reinigen umfassen.

Die vorliegende Erfindung betrifft insbesondere eine Anlage mit mindestens einer Bearbeitungslinie zur Bearbeitung von vorzugsweise optischen Werkstücken bzw. Linsen, besonders bevorzugt Brillengläsern. Die Bearbeitungslinie umfasst mehrere, insbesondere (weitgehend) unabhängig arbeitende Bearbeitungseinrichtungen für verschiedene Bearbeitungen. Besonders bevorzugt umfasst die Bearbeitungslinie auch mehrere Bearbeitungseinrichtungen für die gleiche Bearbeitung, um beispielsweise den Durchsatz der Bearbeitungslinie zu erhöhen. Bedarfsweise umfasst die Anlage mehrere, insbesondere unabhängig voneinander arbeitende Bearbeitungslinien und besonders bevorzugt ein vorgeordnetes Transportsystem, um die Werkstücke den Bearbeitungslinien wahlweise zuzufördern.

Die WO 2013/131656 A2 offenbart eine Anlage und ein Verfahren zum Bearbeiten optischer Linsen, wobei Linsen oder Linsenträger mit Linsen unabhängig arbeitenden Bearbeitungseinrichtungen wahlweise zugefördert werden, die eine Bearbeitungslinie bilden. Aufträge mit zu bearbeitenden Linsen, Bearbeitungsplänen, Statusinformationen, Prozessdaten und dergleichen werden von einer zentralen Systemsteuerung bzw. einem zentralen Anzeigesystem verwaltet und bedarfsweise angezeigt. Die Zuförderung von Linsen wahlweise zu verschiedenen Bearbeitungseinrichtungen und in beliebigen Reihenfolgen zusammen mit den unabhängig bearbeitenden Bearbeitungseinrichtungen, die selbstständig Aufträge anfordern und sich zufördern lassen können, gestattet eine wesentlich flexiblere Bearbeitung und insbesondere auch eine wesentlich einfachere Ergänzung bestehender Anlagen als frühere Bearbeitungslinien. Generell ist eine weitergehende Optimierung des Einsatzes der Bearbeitungseinrichtungen schwierig, aber wünschenswert.

Die US 2012/0209416 A1 betrifft eine Anlage zur Randbearbeitung von Brillengläsern. Die Anlage weist eine Vielzahl von Bearbeitungseinrichtungen auf, die jeweils eine eigene Kontrolleinheit aufweisen. Wenn eine Bearbeitungseinrichtung zur Aufnahme eines neuen Linsenbehälters bereit ist, schickt die jeweilige Kontrolleinheit ein Anforderungssignal an eine Hauptkontrolleinheit, die der Bearbeitungseinrichtung einen Behälter zuordnet. Nach dieser Zuordnung wird der Behälter einer Bearbeitungslinie mit mehreren Bearbeitungseinrichtungen zugefördert, wobei die Kontrolleinheiten der Bearbeitungseinrichtungen jeweils überprüfen, ob der zugeförderte Behälter derjenige Behälter ist, der der Bearbeitungseinrichtung zugeordnet wurde. Je nach Ergebnis der Überprüfung wird der Behälter dann der Bearbeitungseinrichtung zugefördert oder zur nächsten Bearbeitungseinrichtung weiter gefördert.

Das Dokument "Modulo Line, Automated lens processing, intelligently combined", gefunden im Internet am 19. Januar 2017 unter der URL http://www.schneider-om.com/fileadmin/schneider-om/pdf/Modulo_Line_06-2014_web.pdf, betrifft ein Bearbeitungssystem zur Bearbeitung von Brillengläsern. Es ist eine Reihe von Vorteilen des Systems beschrieben und es werden verschiedene Bearbeitungseinrichtungen offenbart.

Der vorliegenden Erfindung liegt die Aufgabe zugrunde, ein Verfahren, eine Anlage und ein System zur Bearbeitung vorzugsweise optischer Werkstücke bzw. Linsen anzugeben, wobei eine effiziente Bearbeitung insbesondere auch unter Berücksichtigung aktueller Bedingungen ermöglicht wird.

Die obige Aufgabe wird durch ein Verfahren gemäß Anspruch 1, durch eine Anlage gemäß Anspruch 8 oder durch ein System gemäß Anspruch 12 gelöst. Vorteilhafte Weiterbildungen sind Gegenstand der Unteransprüche.

Gemäß einem Aspekt der vorliegenden Erfindung werden die Werkstücke vorzugsweise mittels eines Transportsystems wahlweise einer von mehreren Bearbeitungslinien entsprechend einer Zuordnung zugefördert. Die Zuordnung bereits zugeordneter Werkstücke wird vorzugsweise bei Erfassung eines neu zu bearbeitenden Werkstücks oder Auftrags und/oder jeweils vor tatsächlicher Übergabe eines Werkstücks von dem Transportsystem an die zugeordnete Bearbeitungslinie - insbesondere unter Berücksichtigung bzw. in Abhängigkeit von Zuordnungsparametern - überprüft und optional durch eine Neuzuordnung ersetzt, insbesondere also geändert bzw. angepasst.

So lässt sich eine optimale Auslastung der Anlage bzw. Bearbeitungslinien und/oder eine besonders effiziente Bearbeitung erreichen oder zumindest unterstützen, da insbesondere auch bei sich mit hoher Dynamik ändernden Fertigungs- und Randbedingungen eine schnelle Reaktion im Sinne einer Selbstkorrektur der Gesamtanlage zur raschen Findung des Optimums, beispielsweise hinsichtlich der Ressourcenauslastung, ermöglicht oder unterstützt wird.

Die vorschlagsgemäße Überprüfung der Zuordnung und optionale Neuzuordnung kann auch als optimierte oder adaptive Vorsteuerung angesehen werden.

Die vorschlagsgemäße Überprüfung der Zuordnung und optionale Neuzuordnung ermöglicht insbesondere eine Vereinfachung des Produktionsplanungssystems bzw. eine hohe Maschinenauslastung und/oder eine hohe Flexibilität, beispielsweise bei Ausfall einzelner Bearbeitungseinrichtungen oder Bearbeitungslinien.

Bei der vorschlagsgemäßen Überprüfung der Zuordnung und optionalen Neuzuordnung können - insbesondere ebenso wie bei der ursprünglichen (ersten) Zuordnung - verschiedene Zuordnungsparameter berücksichtigt werden, die insbesondere die Verfügbarkeit und Befähigung einzelner Bearbeitungseinrichtungen und/oder Bearbeitungslinien und/oder die Bearbeitungszeiten, Bearbeitungsreihenfolgen und/oder sonstige Bearbeitungsanforderungen beinhalten oder abbilden.

Die vorschlagsgemäße Überprüfung der Zuordnung und optionale Neuzuordnung lässt sich auch mit Bearbeitungslinien kombinieren, die (weitgehend) unabhängig arbeitende Bearbeitungseinrichtungen aufweisen, die ihre Werkstücke für die nächste Bearbeitung (selbstständig) anfordern und sich zufördern lassen. Hierbei können auch wiederum Besonderheiten oder Prioritäten, wie Anforderungen hinsichtlich Bearbeitungsgenauigkeit, Bearbeitungsdauer, Werkzeugverfügbarkeit oder sonstige Befähigung oder dergleichen, von der jeweiligen Bearbeitungseinrichtung bzw. durch entsprechende Eingriffe oder Vermerke, beispielsweise der (zentralen) Systemsteuerung der Anlage oder einer zentralen Liniensteuerung der jeweiligen Bearbeitungslinie, berücksichtigt werden.

Gemäß einem anderen, unabhängig realisierbaren Aspekt der vorliegenden Erfindung werden die Werkstücke vorzugsweise mittels eines Transfersystems unabhängig arbeitenden Bearbeitungseinrichtungen entsprechend einer Zuordnung zugefördert oder von diesen angefordert. Die Zuordnung bereits zugeordneter Werkstücke wird nach oder vor jeder Bearbeitung oder vor jeder Zuförderung des bereits zugeordneten Werkstücks überprüft und optional durch eine neue Zuordnung ersetzt. Auch bei dieser Überprüfung der Zuordnung und optionalen Neuzuordnung können wieder Zuordnungsparameter, insbesondere im bereits genannten Sinne, berücksichtigt werden.

Die vorschlagsgemäße Überprüfung der Zuordnungen und optionale Neuzuordnung ist einer optimalen Auslastung der Anlage bzw. Bearbeitungseinrichtungen und/oder einer besonders effizienten Bearbeitung zuträglich, da insbesondere auch bei sich mit hoher Dynamik ändernden Fertigungs- und Randbedingungen eine schnelle Reaktion im Sinne einer Selbstkorrektur der Gesamtanlage zur raschen Findung des Optimums, beispielsweis hinsichtlich der Ressourcenauslastung, ermöglicht oder zumindest unterstützt wird.

Gemäß einem weiteren, wiederum unabhängigen Aspekt der vorliegenden Erfindung werden Aufträge für die Bearbeitung der Werkstücke von einer Systemsteuerung entsprechend einer Zuordnung wahlweise an eine erste Anlage mit mindestens einer Bearbeitungslinie an einem ersten Standort oder an eine zweite Anlage mit mindestens einer Bearbeitungslinie an einem zweiten (anderen) Standort übermittelt. Vorzugsweise wird die Zuordnung bereits zugeordneter Aufträge bei Erfassung eines neuen Auftrags und/oder jeweils vor der tatsächlichen (ersten) Bearbeitung eines Werkstücks in einer Anlage bzw. Bearbeitungslinie überprüft und optional durch eine Neuzuordnung ersetzt. Die Zuordnung bzw. Neuzuordnung erfolgt vorzugsweise wieder in Abhängigkeit von Zuordnungsparametern, insbesondere im bereits genannten Sinne.

So lässt sich eine optimale Auslastung der Anlagen bzw. Bearbeitungslinien und/oder eine besonders effiziente Bearbeitung erreichen oder zumindest unterstützen, da insbesondere auch bei sich mit hoher Dynamik ändernden Fertigungs- und Randbedingungen eine schnelle Reaktion im Sinne einer Selbstkorrektur des gesamten Systems zur raschen Findung des Optimums, beispielsweise hinsichtlich der Ressourcenauslastung, ermöglicht oder unterstützt wird.

Eine vorschlagsgemäße Anlage zeichnet sich gemäß einem Aspekt der vorliegenden Erfindung insbesondere durch eine Systemsteuerung aus, die derart ausgebildet ist, dass die Zuordnung bereits zugeordneter Werkstücke bei Erfassung eines neuen zu bearbeitenden Werkstücks oder Auftrags und/oder jeweils vor tatsächlicher Übergabe eines Werkstücks an die zugeordnete Bearbeitungslinie überprüft und optional durch eine Neuzuordnung ersetzt wird. Das Transportsystem fördert dann die Werkstücke den Bearbeitungslinien entsprechend der Zuordnung bzw. Neuzuordnung zu. Hierdurch ergeben sich wiederum entsprechende Vorteile, wie bei dem oben genannten Verfahren.

Gemäß einem anderen, unabhängigen Aspekt der vorliegenden Erfindung zeichnet sich eine vorschlagsgemäße Anlage zur Bearbeitung vorzugsweise optischer Werkstücke insbesondere dadurch aus, dass die Systemsteuerung oder eine Bearbeitungslinie derart ausgebildet ist, dass die Zuordnung bereits zugeordneter Werkstücke nach oder vor jeder Bearbeitung oder vor jeder Zuförderung zu einer Bearbeitungseinrichtung der Bearbeitungslinie überprüft und optional durch eine Neuzuordnung ersetzt wird. Auch hier ergeben sich entsprechende Vorteile, wie bereits oben bei dem entsprechenden Verfahren beschrieben.

Gemäß einem weiteren, ebenfalls unabhängig realisierbaren Aspekt der vorliegenden Erfindung weist ein vorschlagsgemäßes System zur Bearbeitung vorzugsweise optischer Werkzeuge zwei Anlagen an unterschiedlichen Standorten auf, die jeweils mindestens eine Bearbeitungslinie mit insbesondere mehreren Bearbeitungseinrichtungen zur Bearbeitung der Werkstücke aufweisen. Weiter weist das System eine Systemsteuerung zur Verwaltung von Aufträgen für die Bearbeitung der Werkstücke und Übermittlung von Aufträgen an die Anlagen entsprechend einer Zuordnung auf. Vorzugsweise ist die Systemsteuerung zur Überprüfung bereits zugeordneter Aufträge bei Erfassung eines neuen Auftrags und/oder jeweils vor tatsächlichem Beginn der Bearbeitung eines Werkstücks und optional zur Neuzuordnung ausgebildet. Insbesondere erfolgt die Zuordnung oder Neuzuordnung wieder in Abhängigkeit von Zuordnungsparametern, insbesondere im bereits oben beschriebenen Sinne. So ergeben sich auch hier entsprechende Vorteile, wie beim bereits oben beschriebenen Verfahren.

Gemäß einem anderen, unabhängigen Aspekt der vorliegenden Erfindung ist die vorschlagsgemäße Anlage bzw. deren Transportsystem vorzugsweise zur Zirkulation der Werkstücke vor der (wahlweisen) Zuförderung von Werkstücken zu einer der Bearbeitungslinien ausgebildet. Dies ermöglicht eine sehr einfache Realisierung einer wahlweisen Zuförderung und optionalen Zwischenspeicherung.

Besonders bevorzugt kann eine Doppelringanordnung gebildet werden, wenn das den Bearbeitungslinien vorgeordnete Transportsystem eine erste Ringanordnung und eine oder mehrere daran angeschlossene Bearbeitungslinien eine weitere Ringanordnung zur jeweiligen Zirkulation bzw. Kreisförderung von Werkstücken, insbesondere Linsen oder Linsenträgern mit Linsen, bilden.

Vorzugsweise werden die Werkstücke bzw. Linsen oder Linsenträger mit den Linsen verschiedenen Bearbeitungseinrichtungen einer Bearbeitungslinie zur unabhängigen Bearbeitung wahlweise zugefördert. Insbesondere werden die Werkstücke von Fördereinrichtungen in den Bearbeitungseinrichtungen unabhängig gefördert, wobei die Werkstücke von Transfereinrichtungen zwischen den Bearbeitungseinrichtungen temporär aufgenommen und wahlweise an die nächste Bearbeitungseinrichtung oder eine parallele Transportspur weiter gefördert werden. Hierbei werden die Transfereinrichtungen von einer vorzugsweise zentralen oder gemeinsamen Steuereinrichtung gesteuert, wobei die Fördereinrichtungen der Bearbeitungseinrichtungen hingegen vorzugsweise von der jeweiligen Bearbeitungseinrichtung oder deren Maschinensteuerung gesteuert werden. Dies vereinfacht die Steuerung und gestattet insbesondere eine optimierte Bearbeitung bei den einzelnen Bearbeitungseinrichtungen. Weiter werden hierdurch eine Erweiterung der Anlage und ein Anschluss von weiteren Bearbeitungseinrichtungen wesentlich erleichtert.

Generell ist anzumerken, dass die erforderlichen Bearbeitungsschritte und deren Reihenfolge, um aus einem Rohling ein bearbeitetes bzw. fertiges Werkstück zu fertigen, vorzugsweise in einem sogenannten Bearbeitungsplan festgelegt sind bzw. werden, aber dass bei mehreren Bearbeitungseinrichtungen für die gleiche Bearbeitung, beispielsweise für das Polieren, die jeweils konkret zu benutzende Einrichtung ausgewählt werden kann. Die unabhängige Bearbeitung durch die Bearbeitungseinrichtungen ist vorzugsweise so zu verstehen, dass die Bearbeitung in der jeweiligen Einrichtung unabhängig von anderen Bearbeitungen und unabhängig von dem Transfersystem abläuft, wobei aber die Reihenfolge der Bearbeitungsschritte vorgegeben ist bzw. erhalten bleibt. Der tatsächliche Bearbeitungszustand spiegelt sich im Bearbeitungsstatus wieder, der insbesondere angibt, welche Bearbeitung schon erfolgt ist oder als nächstes erfolgen soll, wobei dies besonders bevorzugt unter Verweis auf den entsprechenden Bearbeitungsplan für das jeweilige Werkstück erfolgt.

Alternativ oder zusätzlich ist die unabhängige Bearbeitung durch die Bearbeitungseinrichtung vorzugsweise so zu verstehen, dass die Bearbeitungseinrichtungen selbsttätig bzw. unabhängig von einer zentralen Steuerung zu bearbeitende Werkstücke - besonders bevorzugt unter Berücksichtigung der erforderlichen Bearbeitung - auswählen bzw. anfordern und/oder sich zufördern lassen.

Diese Auswahl kann wahlweise in einer logischen Ebene oder in der physischen Ebene erfolgen. Bei Auswahl in der logischen Ebene kann die jeweilige Bearbeitungseinrichtung beispielsweise einen Auftrag oder einen Datensatz mit Informationen über eine zu bearbeitende Linse aus einem Datenspeicher, Datenbankserver, einer Systemsteuerung o.dgl. auswählen und sich dieses Werkstück bzw. den entsprechenden Träger mit diesem Werkstück dann zufördern (lassen).

Bei Auswahl in der physischen Ebene kann eine Bearbeitungseinrichtung beispielsweise zu bearbeitende Werkstücke bzw. deren Träger - insbesondere mittels eines Sensors o. dgl. - erfassen oder identifizieren und unter Berücksichtigung des jeweiligen Auftrags bzw. Datensatzes mit Informationen zur erforderlichen Bearbeitung ein geeignetes Werkstück auswählen und sich zur Bearbeitung zufördern (lassen). Hierdurch wird eine zumindest weitgehend autonome Bearbeitung von Linsen durch die einzelnen Bearbeitungseinrichtungen erreicht, so dass insbesondere bei der Erweiterung von Anlagen eine ansonsten erforderliche, sehr aufwendige Umprogrammierung oder Neuprogrammierung von zentralen Steuerungen ganz unterbleiben oder zumindest minimiert werden kann.

Ein bevorzugter Aspekt der vorliegenden Erfindung liegt also insbesondere darin, dass die Bearbeitungseinrichtungen zumindest möglichst weitgehend selbsttätig bzw. unabhängig arbeiten, so dass besonders bevorzugt die Bearbeitungseinrichtungen individuell Werkstücke vom Transfersystem holen bzw. anfordern, um eine erforderliche Bearbeitung durchzuführen, und danach die bearbeiteten Werkstücke wieder an das Transfersystem zurückgeben, also in die Förderung bzw. den Förderkreislauf wieder einschleusen. Diese Selbstständigkeit bzw. Unabhängigkeit der Bearbeitungseinrichtungen vereinfacht das Einbinden zusätzlicher oder neuer Bearbeitungseinrichtungen in die Anlage wesentlich.

Bei einer im vorgenannten Sinne unabhängig arbeitenden Bearbeitungseinrichtung ist es zur Anlagenoptimierung wichtig, wer das Kommando gibt, dass ein neues Werkstück angefordert bzw. geladen werden muss, und wer die Zuordnung, welches Werkstück von welcher Bearbeitungseinrichtung (als nächstes) bearbeitet wird, (endgültig) festlegt bzw. ändert. Vorzugsweise bzw. vorschlagsgemäß ist die (zentrale) Systemsteuerung bzw. die Bearbeitungslinie zu dieser (endgültigen) Festlegung bzw. einer (nur bedarfsweise) erfolgenden Änderung bzw. Neuzuordnung vorgesehen und/oder ausgebildet.

Bei einer Anlage mit mehreren, vorzugsweise unabhängig arbeitenden Bearbeitungslinien ist es zur Anlagenoptimierung vorteilhaft bzw. vorgesehen, die Zuordnung der Werkstücke zu einer bestimmten Bearbeitungslinie vor der tatsächlichen Zuförderung zu dieser Bearbeitungslinie und/oder bei Erfassung eines neuen Auftrags oder Werkstücks zu überprüfen und gegebenenfalls anzupassen oder zu ändern, insbesondere also durch eine Neuzuordnung zu ersetzen. Hierbei können dann auch insbesondere neue bzw. aktuelle Informationen (Zuordnungsparameter), wie die Verfügbarkeit einer Bearbeitungslinie bzw. bestimmter Bearbeitungseinrichtungen, berücksichtigt werden, um insbesondere eine effiziente Bearbeitung bzw. schnelle oder kostengünstige Bearbeitung zu ermöglichen bzw. zu gewährleisten.

Entsprechend vorteilhaft ist die alternativ oder zusätzlich vorgesehene zentrale Verwaltung von Aufträgen zur Bearbeitung von Werkstücken, insbesondere Linsen bzw. Brillengläsern, wobei die Aufträge insbesondere unter Berücksichtigung von Zuordnungsparametern, die insbesondere auch die Verfügbarkeit von entsprechenden Rohlingen, Bearbeitungskapazitäten und Befähigungen berücksichtigen, wahlweise an eine Anlage von mehreren Anlagen an unterschiedlichen Standorten übermittelt werden. An der entsprechenden Anlage kann dann die auftragsgemäße Bearbeitung insbesondere eines dort bereits vorhandenen Rohlings in gewünschter Weise erfolgen. Das (fertig) bearbeitete Werkstück, insbesondere Brillenglas, kann dann beispielsweise an die Lieferadresse verschickt werden. Auf diese Weise können neben einer optimalen Auslastung auch sehr kurze Lieferzeiten realisiert werden, da beispielsweise unterschiedliche Verfügbarkeiten, insbesondere auch aufgrund unterschiedlicher Zeitzonen der verschiedenen Standorte, der Anlagen berücksichtigt werden können.

Gemäß einem weiteren, vorzugsweise unabhängig realisierbaren Aspekt der vorliegenden Erfindung sind bzw. werden Bearbeitungseinrichtungen zum Blocken (temporären Verbinden von Werkstücken mit einem Halter bzw. Blockstück) für unterschiedliche Blockgrößen eingestellt oder eingerichtet und die Werkstücke einer der Bearbeitungseinrichtungen in Abhängigkeit von der passenden bzw. gewünschten Blockgröße insbesondere gemäß einer vorherigen Zuordnung mittels des den Bearbeitungseinrichtungen zugeordneten Transfer- bzw. Transportsystems zugefördert. Besonders bevorzugt bilden diese Bearbeitungseinrichtungen zum Blocken optional zusammen mit einem vorgeordneten Stacker oder Speicher, insbesondere zur Vorsortierung, und/oder einer nachgeordneten Bearbeitungseinrichtung zum Zwischenspeichern eine Block- bzw. Bearbeitungslinie. Diese Block- bzw. Bearbeitungslinie kann insbesondere mehreren Bearbeitungslinien für die weitergehende Bearbeitung der Werkstücke vorgeordnet sein. So wird eine besonders effiziente Bearbeitung ermöglicht.

Die vorgenannten und nachfolgenden Aspekte und Merkmale der vorliegenden Erfindung können beliebig miteinander kombiniert, aber auch jeweils unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsbeispiele anhand der Zeichnung. Es zeigt:
- Fig. 1: eine schematische Darstellung einer vorschlagsgemäßen Anlage mit mehreren Bearbeitungseinrichtungen und dazwischen angeordneten Transfereinrichtungen;
- Fig. 2: eine schematische Darstellung eines Linsenträgers mit zu bearbeitenden Linsen;
- Fig. 3: eine Transfereinrichtung der vorschlagsgemäßen Anlage in einer ausschnittsweisen Vergrößerung von Fig. 1;
- Fig. 4: eine Wechseleinrichtung der vorschlagsgemäßen Anlage zum Wechsein zwischen Transportspuren in einer ausschnittsweisen Vergrößerung von Fig. 1;
- Fig. 5: eine schematische Darstellung der vorschlagemäßen Anlage gemäß eines anderen Ausführungsbeispiels;
- Fig. 6: eine schematische Darstellung der vorschlagsgemäßen Anlage gemäß eines weiteren Ausführungsbeispiels;
- Fig. 7: eine schematische Darstellung der vorschlagsgemäßen Anlage gemäß eines weiteren Ausführungsbeispiels;
- Fig. 8: eine schematische Darstellung der vorschlagsgemäßen Anlage gemäß eines weiteren Ausführungsbeispiels;
- Fig. 9: ein schematisches Blockschaltbild eines bevorzugten Steuerungsaufbaus einer vorschlagsgemäßen Anlage;
- Fig. 10: eine schematische Darstellung einer vorschlagsgemäßen Anlage mit einem Transportsystem und mehreren daran angeschlossenen Bearbeitungslinien;
- Fig. 11: eine schematische Darstellung einer vorschlagsgemäßen Zuordnung von zu bearbeitenden Werkstücken zu Bearbeitungslinien und deren Neuzuordnung; und
- Fig. 12: eine schematische Darstellung eines vorschlaggemäßen Systems mit zwei Anlagen zur Bearbeitung an unterschiedlichen Standorten.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

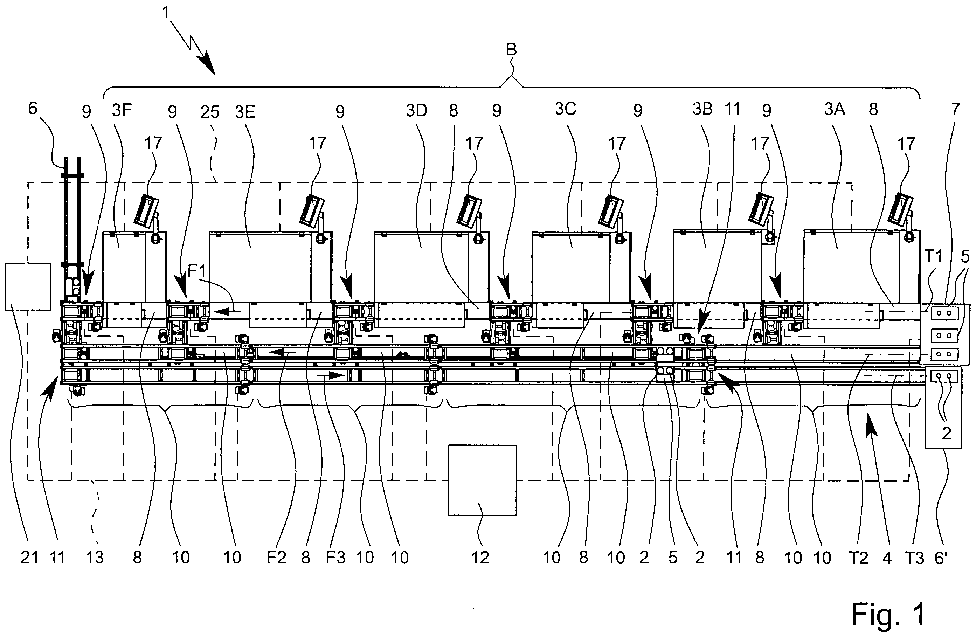

Fig. 1 zeigt in einer schematischen Darstellung eine vorschlagsgemäße Vorrichtung bzw. Anlage 1 zur Bearbeitung von vorzugsweise optischen Werkstücken, insbesondere Linsen 2, also eine Linsenbearbeitungsanlage. Nachfolgend wird als besonders bevorzugtes Ausführungsbeispiel primär auf die Bearbeitung von Linsen für Brillen bzw. von Brillengläsern näher eingegangen. Vorzugsweise gelten diese Ausführungen jedoch entsprechend auch für das Bearbeiten sonstiger Linsen 2 oder generell optischer Werkstücke.

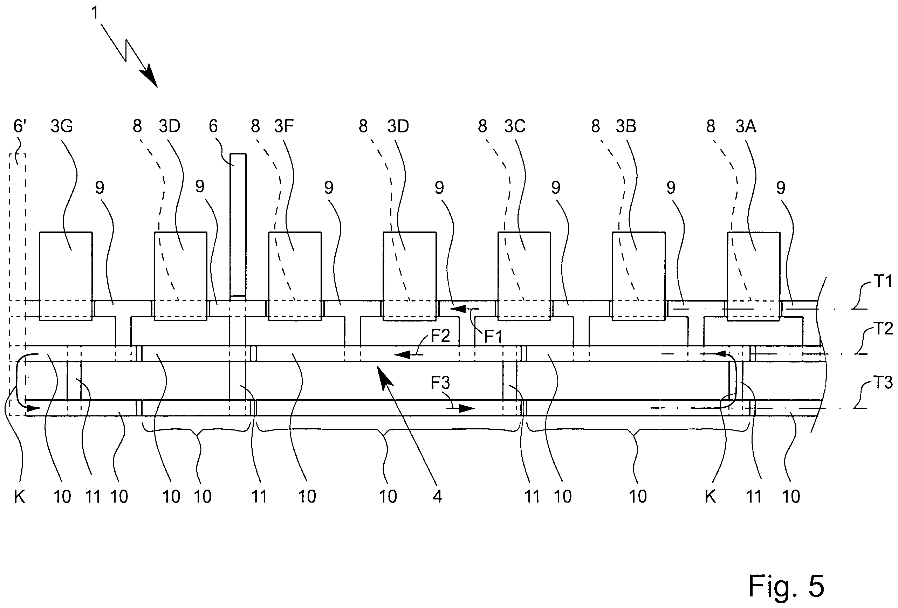

Die Anlage 1 weist mehrere separate Bearbeitungseinrichtungen 3 zur unabhängigen Bearbeitung der Linsen 2 auf. Beispielsweise kann die Anlage 1 insbesondere mindestens eine Bearbeitungseinrichtung 3A zum Blocken (temporäres Verbinden mit einem Halter) von Linsen 2, eine Bearbeitungseinrichtung 3B zum Zwischenlagern von Linsen 2 (vorzugsweise zum Abkühlen nach dem Blocken), eine Bearbeitungseinrichtung 3C zur formgebenden, insbesondere spanenden oder fräsenden Bearbeitung von Linsen 2, eine Bearbeitungseinrichtung 3D zum Polieren von Linsen 2, eine Bearbeitungseinrichtung 3E zum Prüfen bzw. Messen von Linsen 2, eine Bearbeitungseinrichtung 3F zum Markieren von Linsen 2 und/oder eine Bearbeitungseinrichtung 3G zum Beschichten von Linsen 2 (in Fig. 5 angedeutet) aufweisen.

Bedarfsweise können auch mehrere gleichartige Bearbeitungseinrichtungen 3, beispielsweise zwei oder mehr Bearbeitungseinrichtungen 3 für die gleiche Bearbeitung vorhanden bzw. in die Anlage 1 integriert sein. Beispielsweise können mehrere Bearbeitungseinrichtungen 3C zur formgebenden Bearbeitung, mehrere Bearbeitungseinrichtungen 3D zum Polieren, usw. vorgesehen sein. Dies hängt insbesondere von dem Durchsatz der verschiedenen Bearbeitungseinrichtungen 3 und/oder den gewünschten Bearbeitungen ab. Ein besonderer Vorteil der vorschlagsgemäßen Anlage 1 besteht nämlich darin, dass zusätzliche Bearbeitungseinrichtungen 3 auch später je nach Bedarf noch in die Anlage 1 sehr leicht integriert bzw. eingebunden werden können, Erweiterungen also sehr einfach erfolgen können.

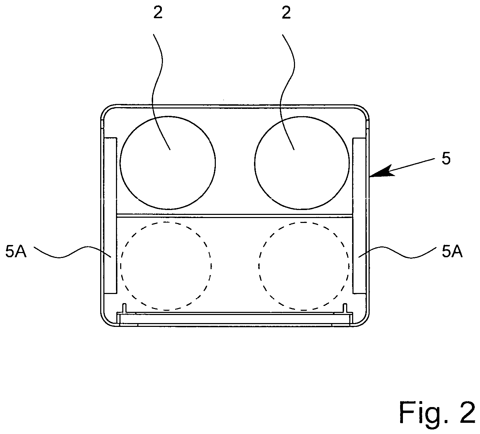

Die Anlage 1 weist vorzugsweise ein Transfersystem 4 zum Transport der Linsen 2 bzw. von Werkstück- bzw. Linsenträgern 5 mit den Linsen 2 zu und von den Bearbeitungseinrichtungen 3 auf. Das Transfersystem 4 führt die Linsen 2 bzw. Linsenträger 5 (vgl. Fig. 2) insbesondere den Bearbeitungseinrichtungen 3 zu und/oder transportiert bzw. fördert die Linsen 2 bzw. Linsenträger 5 nach einer erfolgten Bearbeitung in einer Bearbeitungseinrichtung 3 zu einer anderen Bearbeitungseinrichtung 3 oder zu einer Abgabe 6, wie in Fig. 1 angedeutet. Die Abgabe 6 kann beispielsweise eine Übergabeeinrichtung, einen Rolltisch und/oder sonstige Speichereinrichtung umfassen oder daraus gebildet sein.

Die Anlage 1 weist neben der Abgabe 6 vorzugsweise auch eine Aufnahme 7 auf, die dem Aufnehmen zu bearbeitender Linsen 2 bzw. von die zu bearbeitenden Linsen 2 tragenden Linsenträgern 5 dient.

Die Abgabe 6 ist beim Darstellungsbeispiel vorzugsweise separat von der Aufnahme 7, beispielsweise an einer gegengesetzten Seite, angeordnet. Jedoch können die Aufnahme 7 und die Abgabe 6 bedarfsweise auch nebeneinander oder benachbart angeordnet sein, wie in Fig. 1 durch die zusätzlich als Alternative neben der Aufnahme 7 dargestellte Abgabe 6' angedeutet, und/oder durch eine gemeinsame Einrichtung oder dgl. gebildet sein und/oder an beliebigen Stellen des Transfersystems 4 angeordnet sein.

Jeder Bearbeitungseinrichtung 3 ist vorzugsweise eine eigene Fördereinrichtung 8 zur insbesondere linearen Förderung mindestens einer Linse 2 oder eines Linsenträgers 5 zugeordnet. Insbesondere ist die zugeordnete Fördereinrichtung 8 in die jeweilige Bearbeitungseinrichtung 3 integriert bzw. eingebaut oder an diese angebaut. Die Fördereinrichtung 8 ist vorzugsweise als Förderband ausgebildet.

Die Fördereinrichtungen 8 der Bearbeitungseinrichtungen 3 werden vorzugsweise jeweils von der jeweiligen Bearbeitungseinrichtung 3 bzw. deren Maschinensteuerung (in Fig. 1 nicht dargestellt) gesteuert.

Besonders bevorzugt sind die Bearbeitungseinrichtungen 3 möglichst kompakt oder zumindest im wesentlichen quarderartig oder mit rechteckiger Grundfläche ausgebildet, wobei die Fördereinrichtungen 8 jeweils vorzugsweise hinten, also an einer einem Steuer- oder Bedienpult 17 der Bearbeitungseinrichtung 3 gegenüberliegenden Seite, bzw. an einer Schmalseite der jeweiligen Bearbeitungseinrichtung 3 angeordnet sind. Grundsätzlich ist jedoch auch eine sonstige Anordnung, insbesondere an einer Längsseite der jeweiligen Bearbeitungseinrichtung 3 möglich.

Besonders bevorzugt ragen die Fördereinrichtungen 8 seitlich über die jeweilige Bearbeitungseinrichtung 3 nicht oder nur gering und/oder um ein einheitliches Maß vor. Insbesondere entspricht die Länge der Fördereinrichtung 8 zumindest im wesentlichen der Breite der jeweiligen Bearbeitungseinrichtung 3.

Vorzugsweise wird die Gangbreite zwischen benachbarten Bearbeitungseinrichtungen 3 durch eine dazwischen angeordnete Transfereinrichtung 9 festgelegt, auf die später noch eingegangen wird. Die Gangbreite beträgt zum Beispiel etwa 60 cm. Ein Gang zwischen benachbarten Bearbeitungseinrichtungen 3 ist insbesondere für Wartungs- oder Reparaturzwecke und/oder auch zum Nachfüllen von Betriebsmitteln oder dgl. erforderlich bzw. wünschenswert.

Die Bearbeitungseinrichtungen 3 werden vorzugsweise nebeneinander angeordnet bzw. aufgestellt, so dass die Fördereinrichtungen 8 zumindest im wesentlichen in einer Linie verlaufen bzw. hintereinander liegen und/oder eine vorzugsweise zumindest im wesentlichen geradlinige erste Transportspur T1 (strichpunktiert in Fig. 1 angedeutet) bilden.

Es ist anzumerken, dass die erste Transportspur T1 und/oder eine zweite Transportspur T2 auch einem Polygonzug entsprechen, also aus verschiedenen gradlinigen Strecken bzw. Abschnitten aufgebaut sein und beispielsweise über Eck oder in U-Form verlaufen kann bzw. können. Entlang dieser Abschnitte sind vorzugsweise jeweils mehrere Bearbeitungseinrichtungen 3 in einer Reihe derart angeordnet, dass diese Bearbeitungseinrichtungen 3 mit ihren Fördereinrichtungen 8 entlang dieser Strecke bzw. dieses Abschnitts angeordnet sind. Dies führt zu einer großen Flexibilität bei Erweiterung(en) der vorschlagsgemäßen Anlage 1, da insbesondere quasi beliebige Verlängerungen, insbesondere beim Anbau oder Ausbau der Anlage 1, insbesondere durch Einbindung zusätzlicher Bearbeitungseinrichtungen 3, und/oder bei entsprechendem Ausbau des Transfersystems 4 ermöglicht werden.

Das Transfersystem 4 weist vorzugsweise Transfereinrichtungen 9 auf, die jeweils zwischen zwei benachbarten Bearbeitungseinrichtungen 3 (einer Reihe) angeordnet sind. Vorzugsweise sind Transfereinrichtungen 9 zwischen einigen oder allen (unmittelbar) benachbarten Bearbeitungseinrichtungen 3 angeordnet.

Die Transfereinrichtungen 9 sind vorzugsweise jeweils zur Aufnahme und insbesondere temporären Zwischenspeicherung mindestens einer Linse 2 oder eines Linsenträgers 5 und/oder zur bedarfsweisen Weiterförderung dieser Linse 2 bzw. dieses Linsenträgers 5 wahlweise an die Fördereinrichtung 8 einer nachfolgenden Bearbeitungseinrichtung 3 oder an eine zweite Transportspur T2 der Anlage 1 bzw. des Transfersystems 4 ausgebildet.

Die zweite Transportspur T2 verläuft vorzugsweise ebenfalls wie die erste Transportspur T1 zumindest im wesentlichen geradlinig oder polygonartig und/oder parallel zu der ersten Transportspur T1.

Die Aufnahme 7 nimmt vorzugsweise von zu bearbeitende Werkstücke oder Linsen 2 bzw. Linsenträger 5 mit den zu bearbeitenden Linsen 2 auf. Die Aufnahme 7 kann insbesondere derart ausgebildet sein, dass diese die zu bearbeitenden Linsen 2 bzw. die Linsenträger 5 wahlweise an die erste oder zweite Transportspur T1, T2 ausgibt.

Das Transfersystem 4 weist vorzugsweise mehrere Fördereinrichtungen 10 auf, die insbesondere in Reihe bzw. hintereinander angeordnet sind, um die zweite Transportspur T2 zu bilden. Die Linsen 2 bzw. Linsenträger 5 können also entlang dieser zweiten Transportspur T2 mittels einer oder mehrerer Fördereinrichtungen 10 transportiert bzw. gefördert werden.

Die Fördereinrichtungen 10 der zweiten Transportspur T2 sind vorzugsweise unabhängig voneinander steuerbar, um Linsen 2 bzw. Linsenträger 5 unabhängig voneinander bzw. abschnittsweise auch entlang der zweiten Transportspur T2 fördern zu können. Beispielsweise kann eine Linse 2 bzw. einen Linsenträger 5 auf einer Fördereinrichtung 10 angehalten werden, während eine andere Linse 2 bzw. ein anderer Linsenträger 5 auf einer anderen Fördereinrichtung 10 der zweiten Transportspur T2 weiter gefördert wird.

Es ist aufgrund des vorzugsweise segmentartigen oder abschnittsweisen Aufbaus der zweiten Transportspur T2 bzw. aufgrund des Einsatzes unabhängig steuerbarer Fördereinrichtungen 10 für die zweite Transportspur T2 auch möglich, dass einzelne Fördereinrichtungen 10 entgegengesetzt zur Förderrichtung F1 der ersten Transportspur T1 also rückwärts fördern, während andere Fördereinrichtungen 10 der zweiten Transportspur T2 beispielsweise anhalten oder weiter vorwärts fördern.

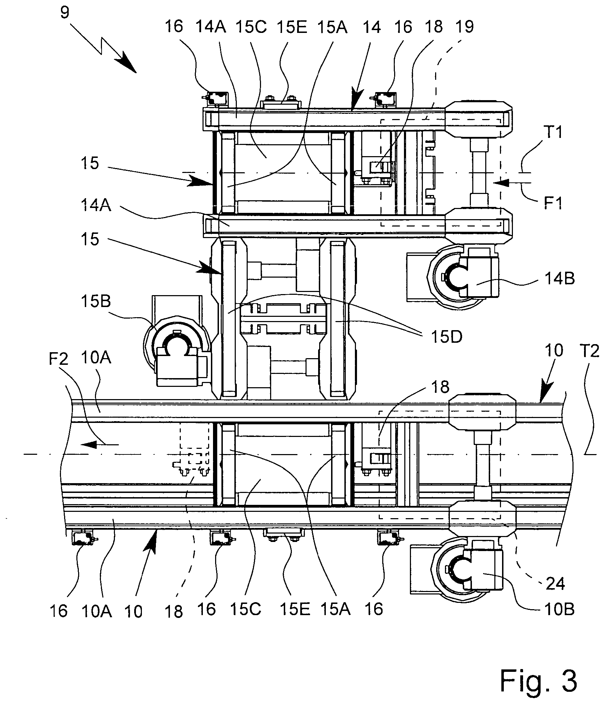

Alternativ oder zusätzlich zu der unterschiedlichen Steuerung von Fördereinrichtungen 10 der zweiten Transportspur T2 und/oder einer Rückwärtsförderung kann ein Anhalten einzelner Linsen 2 bzw. Linsenträger 5 auch durch entsprechende Stoppeinrichtungen o. dgl. (siehe beispielsweise Stoppeinrichtungen 18 in der Transportspur T2 in Fig. 3) realisiert werden, so dass in diesem Fall die Fördereinrichtungen) 10 weiter bzw. kontinuierlich betrieben werden kann bzw. können. Dies gilt vorzugsweise für einige oder alle Transportspuren T bzw. Fördereinrichtungen 10.

Zwischen den Fördereinrichtungen 10 der zweiten Transportspur T2 können bedarfsweise die Transfereinrichtungen 9 angeordnet sein. Jedoch können die Transfereinrichtungen 9 alternativ auch direkt auf eine zugeordnete Fördereinrichtung 10 der zweiten Transportspur T2 fördern. In diesem Fall können die Fördereinrichtungen 10 hintereinander ohne Zwischenschaltung von Transfereinrichtungen 9 angeordnet werden, wie in Fig. 1 und 3 angedeutet.

Die Förderrichtung der ersten Transportspur T1 ist in Fig. 1 durch einen Pfeil F1 angedeutet. Die zweite Transportspur T2 fördert vorzugsweise in die gleiche Richtung, wie durch Pfeil F2 angedeutet.

Die zweite Transportspur T2 dient insbesondere dazu, dass Linsen 2 bzw. Linsenträger 5 an einzelnen Bearbeitungseinrichtungen 3 vorbei gefördert werden können. Beispielsweise kann eine solche Vorbeiförderung zur besseren Auslastung von Bearbeitungseinrichtungen 3, zur Förderung zu einer bestimmten Bearbeitungseinrichtung 3 für eine spezielle Bearbeitung, beispielsweise aufgrund eines Ausfalls oder einer Auslastung einer Bearbeitungseinrichtung 3 oder aufgrund einer nicht erforderlichen Bearbeitung durch eine Bearbeitungseinrichtung 3, gewünscht oder erforderlich sein. Alternativ oder zusätzlich kann die Vorbeiförderung auch einem Überholen von anderen Linsen 2 bzw. Linsenträgern 5 dienen, beispielsweise wenn eine vorrangige Bearbeitung einer bestimmten Linse 2 oder mehrerer bestimmter Linsen 2 erfolgen soll.

Vorzugsweise können die Linsen 2 bzw. Linsenträger 5 mittels der Transfereinrichtungen 9 zwischen der ersten und zweiten Transportspur T1, T2 wechseln. Insbesondere ist ein solcher Wechsel zwischen jeder der Bearbeitungseinrichtungen 3 und/oder mittels jeder Transfereinrichtung 9 und/oder in jede Richtung, also von der ersten zur zweiten Transportspur T1, T2 und umgekehrt, möglich.

Die Anlage 1 bzw. das Transfersystem 4 weist vorzugsweise eine dritte Transportspur T3 auf, die vorzugsweise zumindest im wesentlichen geradlinig und/oder parallel zu den anderen Transportspuren T1 und T2 verläuft.

Die Förderrichtung F3 der dritten Transportspur T3 ist vorzugsweise den Förderrichtungen F1 und F2 der anderen Transportspuren T1 und T2 entgegen gerichtet bzw. verläuft vorzugsweise rückwärts. Die Transportspur T3 dient also insbesondere einer Rückförderung oder entgegengesetzten Förderung von Linsen 2 bzw. Linsenträgern 5, beispielsweise zur Wiedereinschleusung (über entsprechende Wechselmöglichkeiten) in die erste oder zweite Transportspur T1, T2 für eine weitere Bearbeitung oder zur Rückförderung beispielsweise zur Abgabe 6'.

Die dritte Transportspur T3 ist vorzugsweise entsprechend oder ähnlich wie die zweite Transportspur T2, besonders bevorzugt aus mehreren in einer Linie bzw. hintereinander angeordneten Fördereinrichtungen 10 aufgebaut, wie in Fig. 5 angedeutet. Die Fördereinrichtungen 10 der dritten Transportspur T3 sind vorzugsweise wieder unabhängig voneinander steuerbar bzw. antreibbar, so dass eine unabhängige Förderung von Linsen 2 bzw. Linsenträgern 5 entlang der dritten Transportspur T3 möglich ist, so wie dies grundsätzlich bereits für die zweite Transportspur T2 oben beschrieben wurde, so dass die diesbezüglichen Ausführungen insbesondere entsprechend oder ergänzend gelten.

Alternativ oder zusätzlich zu der unterschiedlichen Steuerung von Fördereinrichtungen 10 der dritten Transportspur T3 und/oder zu einer Rückwärtsförderung kann ein Anhalten einzelner Linsen 2 bzw. Linsenträger 5 auch durch entsprechende Stoppeinrichtungen o. dgl. (nicht dargestellt) realisiert werden, so dass in diesem Fall die Fördereinrichtung(en) 10 weiter bzw. kontinuierlich betrieben werden kann bzw. können.

Die Anlage 1 bzw. das Transfersystem 4 weist vorzugsweise Wechseleinrichtungen 11 zum Wechseln zwischen Transportspuren T, insbesondere zwischen der zweiten Transportspur T2 und dritten Transportspur T3, also wahlweise von der zweiten Transportspur T2 zur dritten Transportspur T3 und umgekehrt, auf. Die Wechseleinrichtungen 11 können in den beiden Transportspuren T2 und T3 jeweils zwischen den Fördereinrichtungen 10 angeordnet sein. In diesem Fall dienen die Wechseleinrichtungen 11 auch einer gewissen Weiterförderung in Richtung der jeweiligen Förderrichtung F2 bzw. F3, also der Längsförderung. Alternativ können die Wechseleinrichtungen 11 jedoch auch in zugeordnete Fördereinrichtungen 10 integriert sein bzw. mit diesen derart zusammen wirken, dass die Wechselrichtungen 11 lediglich der Querförderung, also lediglich dem Fördern zwischen den jeweiligen Transportspuren T2 und T3 dienen. Dies Art der Integration ist bevorzugt und beim Darstellungsbeispiel gezeigt.

Die Transfereinrichtungen 9 sind beim Darstellungsbeispiel vorzugsweise entsprechend in die zweite Transportspur T2 bzw. in die zugeordnete Fördereinrichtung 10 der zweiten Transportspur T2 integriert. Mit anderen Worten bewirken die Transfereinrichtungen 9 beim Darstellungsbeispiel vorzugsweise keine Längsförderung oder Weiterförderung in der zweiten Transportspur T2 in die Förderrichtung F2.

Die Wechseleinrichtungen 11 und die Transfereinrichtungen 9 können auch kombiniert bzw. in Verlängerung angeordnet sein bzw. eine Baueinheit bilden, wie in Fig. 1 im Bereich der Abgabe 6 beispielhaft angedeutet.

Alternativ können alle oder einzelne Transfereinrichtungen 9 oder Wechseleinrichtungen 11 auch derart ausgebildet sein, dass diese zusätzlich eine wahlweise Querförderung bis zur optionalen Transportspur T3 und/oder einen bedarfsweisen Wechsel zwischen allen Transportspuren T1 bis T3 bzw. zwischen den Transportspuren T1 und T3 ermöglichen.

Vorzugsweise weist die Anlage 1 im Bereich eines Endes bzw. der Abgabe 6, insbesondere wenn diese von der Aufgabestation 7 räumlich getrennt ist, eine zugeordnete Transfereinrichtung 9 und/oder Wechseleinrichtung 11 auf, wie in Fig. 1 angedeutet.

Vorzugsweise sind Wechseleinrichtungen 11 im Bereich des Anfangs und des Endes der zweiten oder dritten Transportspur T2, T3 und/oder dazwischen eine oder mehrere angeordnet, insbesondere um einen Kreislauf bzw. eine Zirkulation oder Kreisförderung K von Linsen 2 bzw. Linsenträgern 5 zu ermöglichen, wie in Fig. 5, 6 und 7 angedeutet.

Die Anlage 1 bzw. das Transfersystem 4 weist vorzugsweise eine Transfersteuerung bzw. Steuereinrichtung 12 - insbesondere eine speicherprogrammierbare Steuerung oder HMI (Mensch-Maschine-Schnittstelle) - zur Steuerung der Transfereinrichtungen 9 und/oder Fördereinrichtungen 10 sowie, sofern vorhanden, der Wechseleinrichtungen 11 und optional der Aufnahme 7 und/oder Abgabe 6 auf, wie in Fig. 1 angedeutet. Der Anschluss erfolgt besonders bevorzugt über ein Bussystem 13, das in Fig. 1 gestrichelt angedeutet ist. Insbesondere erfolgt über das Bussystem 13 die Energieversorgung und/oder Steuerung. Besonders bevorzugt weist das Bussystem 13 ein alle Versorgungsleitungen und/oder Steuerleitungen enthaltendes Buskabel auf.

Bei einer Erweiterung der Anlage 1 können weitere Komponenten, wie Transfereinrichtungen 9, Fördereinrichtungen 10 oder Wechseleinrichtungen 11, einfach direkt an das Bussystem 13 bzw. Buskabel angeschlossen werden. Dementsprechend ist ein Ausbau der Anlage 1 bzw. des Transfersystems 4, ggfs. auch ein Umbau, sehr einfach möglich.

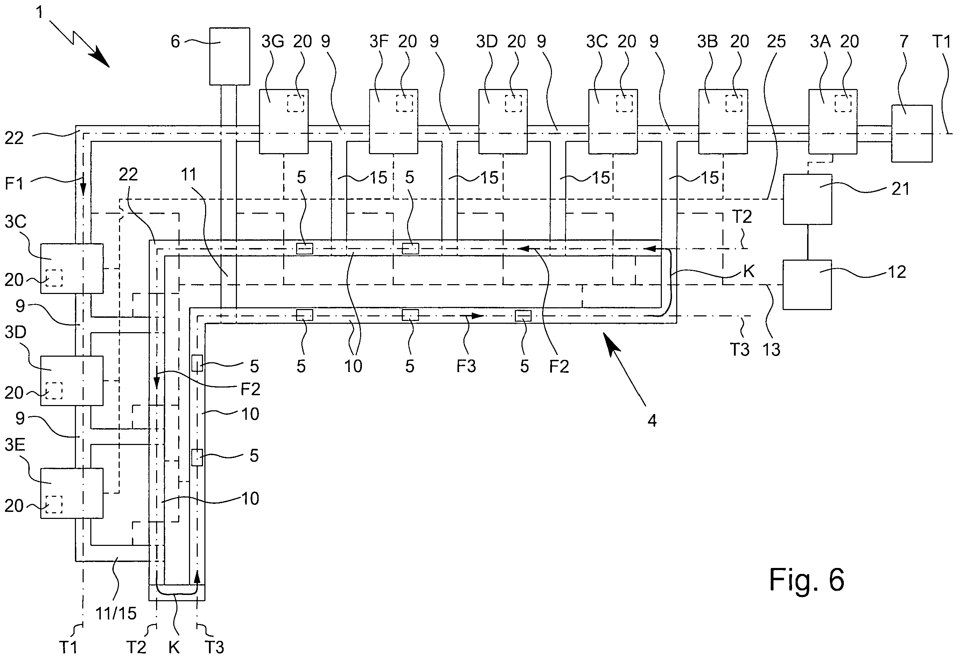

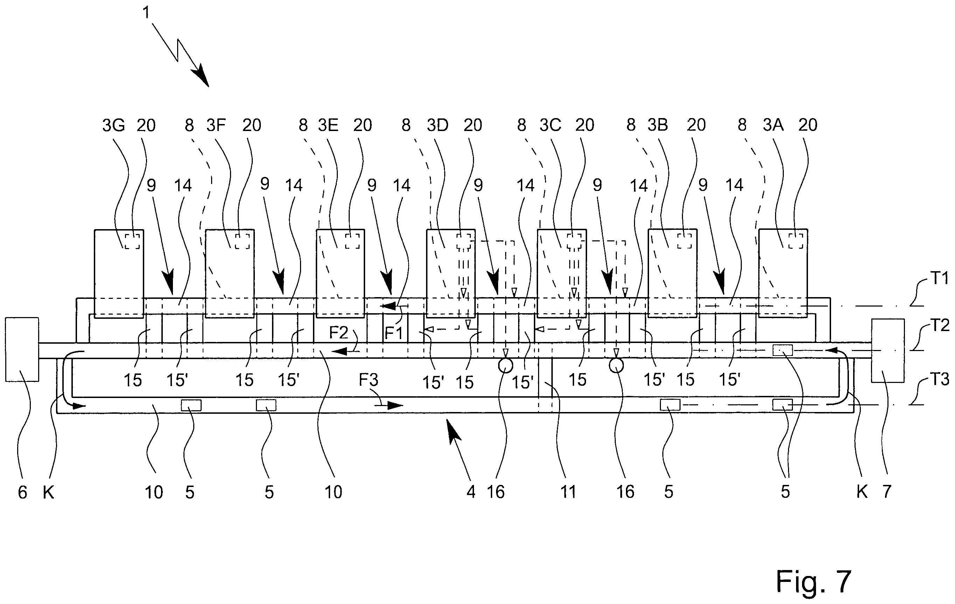

Vorzugsweise erfolgt also eine gemeinsame bzw. zentrale Steuerung des Transfersystems 4. Die den Bearbeitungseinrichtungen 3 zugeordneten Fördereinrichtungen 8 bilden vorzugsweise jedoch keinen Teil des Transfersystems 4 bzw. der Transfersteuerung. Stattdessen werden die Fördereinrichtungen 8 der Bearbeitungseinrichtungen 3 vorzugsweise von den Bearbeitungseinrichtungen 3 selbst bzw. direkt oder von deren Maschinensteuerungen (vgl. Maschinensteuerungen 20 in Fig. 6 und 7) gesteuert. Die Fördereinrichtungen 8 sind dementsprechend vorzugsweise jeweils an die zugeordnete Bearbeitungseinrichtung 3 bzw. deren Maschinensteuerung 20 zur Steuerung der jeweiligen Fördereinrichtung 8 angeschlossen.

Fig. 2 zeigt in einer schematischen Draufsicht eine bevorzugte Ausführungsform eines Linsenträgers 5 zur Aufnahme von mindestens einer, beim Darstellungsbeispiel insbesondere zwei oder mehr zu bearbeitenden Linsen 2. Bei der Linsenbearbeitung bzw. Brillenglasbearbeitung werden üblicherweise zwei zu bearbeitende Linsen 2 bzw. ein Linsenpaar von einem Linsenträger 5 aufgenommen. Dies ist auch hier bevorzugt.

Der Linsenträger 5 weist vorzugsweise eine Kodierung 5A, beispielsweise einen Barcode oder dgl., mit wichtigen Bearbeitungsdaten, Daten zur Identifikation und/oder sonstigen Informationen für beide Linsen 2 oder für jede Linse 2 eine separate Kodierung 5A, wie in Fig. 2 angedeutet, auf. Besonders bevorzugt enthält die Kodierung 5A eine Identifikation oder Auftragsnummer oder dergleichen für die jeweilige Linse(n) 2, so dass mittels der Identifikation bzw. Auftragsnummer ein Bearbeitungsplan und/oder Bearbeitungsstatus bzw. erforderliche Bearbeitungsschritte, Bearbeitungsreihenfolgen, Bearbeitungsdaten und/oder sonstige Informationen, beispielsweise über ein entsprechendes Serversystem, Datenbanksystem oder dergleichen, insbesondere eine Systemsteuerung 21, wie in Fig. 1 angedeutet, bestimmbar oder davon abrufbar sind.

Vorzugsweise ist der Abstand der Linsen 2 in einem Linsenträger 5 genauso groß wie der Abstand einer Linse 2 in einem Linsenträger 5 zu der benachbarten Linse 2 in einem unmittelbar benachbarten Linsenträger 5. Dies vereinfacht die Handhabung bzw. Positionierung, insbesondere in den Bearbeitungseinrichtungen 3. Dieser Abstand beträgt bei Darstellungsbeispiel vorzugsweise 130 mm. Die Länge der Linsenträger 5 beträgt vorzugsweise das Doppelte, also hier 260 mm.

Der Linsenträger 5 ist beim Darstellungsbeispiel vorzugsweise kistenartig und/oder in der Draufsicht zumindest im Wesentlichen quadratisch ausgebildet.

Der Linsenträger 5 weist beim Darstellungsbeispiel vorzugsweise zusätzliche Lager- oder Aufnahmeplätze, beispielsweise für Werkzeuge, insbesondere Polierwerkzeuge, auf, wie in Fig. 2 gestrichelt angedeutet.

Anstelle des hier beschriebenen Linsenträgers 5 kann jedoch auch ein sonstiger Halter für eine Linse 2 oder mehrere Linsen 2 eingesetzt werden.

Generell ist anzumerken, dass auch eine blockstückfreie Bearbeitung erfolgen kann. Beim Darstellungsbeispiel wird jedoch bevorzugt oder zumindest derzeit noch die jeweilige Linse 2 temporär mit einem zugeordneten Halter bzw. Blockstück (nicht dargestellt) insbesondere in der Bearbeitungseinrichtung 3A verbunden. Mittels dieses Halters bzw. Blockstücks wird die jeweilige Linse 2 dann vorzugsweise bei weiteren Bearbeitungen bzw. in anderen Bearbeitungseinrichtungen 3 jeweils gehalten bzw. positioniert.

Fig. 3 zeigt in einer schematischen Darstellung bzw. Vergrößerung von Fig. 1 einen bevorzugten Aufbau einer vorschlagsgemäßen Transfereinrichtung 9. Die Transfereinrichtung 9 weist vorzugsweise eine (erste) Fördereinrichtung 14 zur Längsförderung (Förderung in Richtung F einer der Transportspuren T, insbesondere der ersten Transportspur T1) und eine (zweite) Fördereinrichtung 15 zur Querförderung (Förderung quer oder senkrecht zu den Förderrichtungen F bzw. Transportspuren T bzw. zum Transportspurwechsel) auf.

Die Fördereinrichtungen 14 und 15 sind vorzugsweise ebenso wie die Fördereinrichtungen 8 und/oder 10 als Band- oder Gurtförderer ausgebildet. Beim Darstellungsbeispiel weisen die Fördereinrichtungen 10 vorzugsweise Bänder oder Gurte 10A und zugeordnete Antriebe 10B auf. Die Fördereinrichtungen 14 weisen vorzugsweise jeweils Bänder oder Gurte 14A und zugeordnete Antriebe 14B auf. Die Fördereinrichtungen 15 weisen vorzugsweise Bänder oder Gurte 15A und zugeordnete Antriebe 15B auf.

Mittels der durch den zugeordneten Antrieb 10B, 14B oder 15B antreibbaren Bänder bzw. Gurte 10A, 14A, 15A sind darauf aufliegende Linsen 2 bzw. Linsenträger 5 linear in die jeweilige Förderrichtung F bzw. bei der Querförderung quer dazu förderbar.

Die Transfereinrichtung 9 ist vorzugsweise zur Aufnahme und temporären Lagerung bzw. Speicherung mindestens einer Linse 2 oder eines Linsenträgers 5 ausgebildet und weist hierzu insbesondere einen Lager- bzw. Aufnahmebereich 19 auf, wie in Fig. 3 gestrichelt angedeutet. Dies bzw. dieser wird beim Darstellungsbeispiel vorzugsweise durch die Fördereinrichtung 14 gebildet, die eine hierfür ausreichende Länge aufweist. Insbesondere beträgt die Länge der Fördereinrichtung 14 mindestens die einfache Länge eines Linsenträgers 5, beim Darstellungsbeispiel sogar mindestens die doppelte Länge des Linsenträgers 5, um diesen vorzugsweise neben oder in Förderrichtung F1 vor oder stromauf der Fördereinrichtung 15 zur Querförderung bzw. deren Hubtisch 15C aufnehmen bzw. zwischenlagern zu können. Hierzu ist dem Aufnahmebereich 19 vorzugsweise eine geeignete Stoppeinrichtung 18 (beispielsweise mit einem in den Bewegungsweg bewegbaren oder klappbaren Anschlag bzw. ein Vereinzler) zum bedarfsweisen Anhalten des oder eines Linsenträgers 5 in dem Aufnahmebereich 19 zugeordnet. Die Stoppeinrichtung 18 kann einen Linsenträger 5 - hier in dem Aufnahmebereich 19 - insbesondere auch bei weiterlaufender Fördereinrichtung 14 anhalten bzw. stoppen.

In diesem Zusammenhang ist anzumerken, dass vorzugsweise generell ein Stoppen oder Anhalten der Linsenträger 5 mittels entsprechender oder ähnlicher Stoppeinrichtungen 18 (wie beispielhaft in der zweiten Transportspur T2 in Fig. 3 dargestellt) an den gewünschten Stellen oder Positionen des Transfersystems 4 und/oder der Fördereinrichtungen 8 erfolgt, um die Linsenträger 5 individuell bzw. genau, ggf. auch bei weiterlaufenden Fördereinrichtungen 8, 10, 14 und/oder ggf. 15 bzw. Bändern oder Gurten anhalten zu können.

Vorzugsweise weist die Anlage 1 bzw. das Transfersystem 4 oder die jeweilige Fördereinrichtung 8, 10, 14, 15, Transfereinrichtung 9 und/oder Wechseleinrichtung 11 - insbesondere zusätzlich zu den Stoppeinrichtungen 18 bzw. den erwähnten nicht dargestellten Stoppeinrichtungen - geeignete Sensoren 16, wie Lichtschranken, Barcode-Leser o.dgl., auf, insbesondere um das Vorhandensein von Linsen 2 oder Linsenträgern 5 bzw. deren Position erfassen und/oder die Linsenträger 5 richtig positionieren und/oder die Linsen 2 bzw. Linsenträger 5 erfassen oder identifizieren, besonders bevorzugt Kodierungen 5A lesen zu können.

Beim Darstellungsbeispiel entspricht die Länge der Fördereinrichtung 14 bzw. der Transfereinrichtung 9 in Förderrichtung F1 zumindest im wesentlichen dem Abstand benachbarter Bearbeitungseinrichtungen 3 bzw. benachbarter Fördereinrichtungen 8 bzw. der Gangbreite zwischen benachbarter Bearbeitungseinrichtungen 3, wie bereits erwähnt, bzw. mindestens der Länge von zwei Linsenträgern 5.

Es ist anzumerken, dass die Bearbeitungseinrichtungen 3 vorzugsweise generell zumindest mit im wesentlichen gleichem Zwischenabstand aufgestellt werden. Dementsprechend können vorzugsweise baugleiche Transfereinrichtungen 9 dazwischen eingesetzt oder angeordnet werden.

Die Fördereinrichtung 15 zur Querförderung weist, wie in Fig. 3 angedeutet, bei der Transfereinrichtung 9 gemäß dem Darstellungsbeispiel vorzugsweise einen Zwischenförderer mit Bändern oder Gurten 15D zwischen den beiden Transportspuren T1 und T2 bzw. zwischen der Fördereinrichtung 14 und der benachbarten Fördereinrichtung 10 auf.

Die Fördereinrichtung 15 weist vorzugsweise einen gemeinsamen Antrieb 15B zum Antrieb der Bänder bzw. Gurte 15A und, sofern vorhanden, 15D, auf.

Die Bänder bzw. Gurte 15A sind vorzugsweise paarweise zwischen den Gurten 14A der Fördereinrichtung 14 und den Gurten 10A der Fördereinrichtung 10 angeordnet und jeweils vorzugsweise von einem Hubelement, insbesondere einem Hubtisch 15C, getragen. Das Hubelement bzw. der Hubtisch 15C bzw. die Hubelemente/Hubtische 15C und damit die zugeordneten Bänder oder Gurte 15A sind vorzugsweise mittels einer zugeordneten Hubeinrichtung (nicht dargestellt) bedarfsweise anhebbar und absenkbar.

Im Betrieb kann die Fördereinrichtung 14 einen Linsenträger 5 von einer vorgeordneten Bearbeitungseinrichtung 3 aufnehmen und temporär speichern bzw. lagern, insbesondere in dem Aufnahmebereich 19 und/oder über dem Hubtisch 15C bzw. über den Bändern bzw. Gurten 15A. Bei Bedarf kann die Transfereinrichtung 9 bzw. deren Fördereinrichtung 14 den Linsenträger 5 an die nachgeordnete Bearbeitungseinrichtung 3 weiter fördern bzw. wieder abgeben. Alternativ kann die Transfereinrichtung 9 bzw. deren Fördereinrichtung 15 den Linsenträger 5 zu der Transportspur T2 wechseln, also querfördern. In diesem Fall wird der Hubtisch 15C angehoben bis der Linsenträger 5 (in Fig. 3 nicht dargestellt) angehoben und von den Bändern bzw. Gurten 14A der Fördereinrichtung 14 abgehoben wird. Anschließend wird der Linsenträger 5 mittels der Bänder bzw. Gurte 15A - beim Darstellungsbeispiel über den optionalen Zwischenförderer bzw. die Bänder bzw. Gurte 15D - zu der zweiten Transportspur T2 bzw. auf die dortigen Bänder bzw. Gurte 15A gefördert. Vorzugsweise wird immer für die Querförderung auch der Hubtisch 15C in der Transportspur T2 bzw. in der Fördereinrichtung 10 mit bzw. gleichartig angehoben. Ein bevorzugter seitlicher Anschlag 15E, der über die Fördereinrichtung 10 bzw. deren Bänder bzw. Gurte 10A seitlich nach oben vorragt, verhindert, dass der Linsenträger 5 in Querrichtung zu weit gefördert wird bzw. das der Linsenträger 5 über die Fördereinrichtung 10 seitlich hinaus gefördert wird.

Anschließend wird die Fördereinrichtung 15 bzw. werden deren Hubtische 15C wieder abgesenkt und damit der Linsenträger 5 an die Fördereinrichtung 10 übergegeben bzw. auf deren Bänder bzw. Gurte 10A abgelegt, so dass nun eine Förderung entlang der zweiten Transportspur T2 mittels der Fördereinrichtung 10 erfolgen kann.

Beim Darstellungsbeispiel ist die Fördereinrichtung 15 zur Querförderung in die Fördereinrichtung 10 zur Längsförderung integriert, da keine separate Fördereinrichtung für die Längsförderung der Transfereinrichtung 9 in der zweiten Transportspur 10 vorgesehen ist, im Gegensatz zu der Fördereinrichtung 14 zur Längsförderung der Transfereinrichtung 9 in der ersten Transportspur T1. Jedoch kann grundsätzlich auch eine solche zusätzliche Fördereinrichtung 14 der Transfereinrichtung 9 in der zweiten Transportspur T2 vorgesehen sein.

Die Transfereinrichtung 9 kann nicht nur für einen Wechsel des Linsenträgers 5 von der ersten Transportspur T1 zu der zweiten Transportspur T2, sondern natürlich auch für den umgekehrten Wechsel, insbesondere zum Einschleusen einer Linse 2 oder eines Linsenträgers 5 in die Transportspur T1 für die Bearbeitung in einer nachfolgenden Bearbeitungseinrichtung 3, verwendet werden. In diesem Fall wird der Linsenträger 5 von der zweiten Transportspur T2 bzw. der zugeordneten Fördereinrichtung 10 über der Fördereinrichtung 15 zur Querförderung bzw. deren Hubtisch 15C in der zweiten Transportspur T2 positioniert. Die Positionierung erfolgt vorzugsweise mittels einer Stoppeinrichtung 18, beispielsweise mittels der gestrichelt dargestellten Stoppeinrichtung 18, die insbesondere in der zweiten Transportspur T2 bzw. nach dem Hubtisch 15C angeordnet ist.

Anschließend kann das Anheben der Transporttische 15C und dann die Querförderung zu der Transportspur T1 durch entsprechenden Antrieb der Bänder bzw. Gurte 15A und 15D mittels des Antriebs 15B erfolgen, bis der Linsenträger 5 auf der Fördereinrichtung 14 positioniert ist, wobei der Aufnahmebereich 19 auch von einem andere Linsenträger 5 belegt sein kann, da der Aufnahmebereich 19 vorzugsweise neben oder insbesondere vor oder stromauf der Fördereinrichtung 15 angeordnet ist. Die Positionierung des quer geförderten Linsenträgers 5 in der Transportspur T1 kann wiederum durch einen optionalen seitlichen Anschlag 15E erleichtert oder festgelegt werden.

Die Transfereinrichtung 9 dient vorzugsweise sowohl einem Einschleusen von Linsen 2 bzw. Linsenträgern 5 in die erste Transportspur T1 als auch einem Ausschleusen von Linsen 2 bzw. Linsenträgern 5 aus der Transportspur T1 in eine andere Transportspur, hier die zweite Transportspur T2.

Die Transfereinrichtung 9 ist insbesondere derart ausgebildet, dass eine Linse 2 bzw. ein Linsenträger 5 quergefördert bzw. in die erste Transportspur T1 eingeschleust werden kann, während eine andere Linse 2 bzw. ein anderer Linsenträger 5 sich im Aufnahmebereich 19 befindet bzw. dort zwischengelagert oder zwischengespeichert ist. So können Linsen 2 bzw. Linsenträger 5 auch zwischen andere Linsen 2 bzw. Linsenträger 5 in der ersten Transportspur T1 eingeschleust werden.

Weiter gestattet die Transfereinrichtung 9, wie bereits angesprochen, ein wahlweises Weiterfördern einer Linse 2 bzw. eines Linsenträgers 5 von der vorherigen Bearbeitungseinrichtung 3 (in der ersten Transportspur T1) bzw. aus dem Aufnahmebereich 19 zu der nächsten Bearbeitungseinrichtung 3 als auch ein Ausschleusen bzw. Querfördern von der ersten Transportspur T1 zu einer anderen Transportspur T, hier der zweiten Transportspur T2. Insbesondere bildet die Transfereinrichtung 9 also eine Weiche, mit insbesondere vorgeordnetem Aufnahmebereich 19 zur Zwischenspeicherung.

Da die Transfereinrichtung 9 vorzugsweise auch zum bereits genannten Einschleusen von Linsen 2 bzw. Linsenträgern 5 in die erste Transportspur T1 ausgebildet ist, bildet die Transfereinrichtung 9 insbesondere eine universell einsetzbare Weiche, die ausgehend von der ersten Förderrichtung F1 ein Abzweigen zur Querförderung zur Ausschleusung als auch ein Einschleusen insbesondere über die gleiche Querförderung bei entgegengesetzter Richtung und zur Weiterförderung in der ersten Förderrichtung F1 ermöglicht. So wird ein sehr kompakter Aufbau bei universeller Einsetzbarkeit ermöglicht.

Anzumerken ist noch, dass das Transfersystem 4 bzw. die zweite Transportspur T2 vorzugsweise ein Anhalten von Linsen 2 bzw. Linsenträgern 5 vor der Querförderung der Transfereinrichtung 9, insbesondere zur Einschleusung in die zweite Transportspur T2, beispielsweise jeweils in einem vorgeordneten Stoppbereich 24, wie gestrichelt in Fig. 3 angedeutet, insbesondere mittels einer zugeordneten Stoppeinrichtung 18 o. dgl., ermöglicht, so dass ein ungestörtes Einschleusen von Linsen 2 bzw. Linsenträgern 5 in die zweite Transportspur T2 erfolgen kann.

Vorzugsweise ist dem Stoppbereich 24 ein Sensor 16 zur Erfassung bzw. Identifizierung von Linsen 2 bzw. Linsenträgern 5 im Stoppbereich 24 zugeordnet.

Vorzugsweise sind Sensoren 16 auch den Hubtischen 15C zugeordnet bzw. im Bereich der Fördereinrichtungen 15 jeweils der ersten und/oder zweiten Transportspur T1 bzw. T2 angeordnet, um dort Linsen 2 bzw. Linsenträger 5 erfassen bzw. identifizieren zu können.

Vorzugsweise ist mindestens ein Sensor 16, der einer Transfereinrichtung 9 und/oder dem Aufnahmebereich 19 und/oder dem Stoppbereich 24 zugeordnet ist, der nachgeordneten Bearbeitungseinrichtung 3 zugeordnet, so dass über diesen Sensor 16 bzw. diese Sensoren 16 ankommende Linsen 2 bzw. Linsenträger 5 erfassbar und vorzugsweise identifizierbar sind, um für die Bearbeitung in der zugeordneten Bearbeitungseinrichtung 3 geeignete Linsen 2 - insbesondere unter Rückgriff auf den oder Berücksichtigung von Bearbeitungsplan und Bearbeitungsstatus der jeweiligen Linse 2 - erkennen und bedarfsweise anfordern zu können.

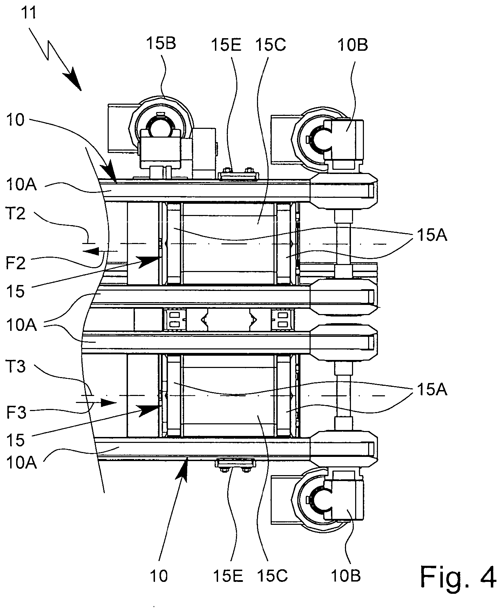

Fig. 4 zeigt in einer schematischen, vergrößerten Ansicht von Fig. 1 einen bevorzugten Aufbau einer Wechseleinrichtung 11. Die Wechseleinrichtung 11 weist vorzugsweise eine Fördereinrichtung 15 zur Querförderung ähnlich der Fördereinrichtung 15 der Transfereinrichtung 9 auf, so dass auf die diesbezüglichen Ausführungen verwiesen wird. Im Unterschied zu der Fördereinrichtung 15 der Transfereinrichtung 9 weist die Fördereinrichtung 15 der Wechselrichtung 11 vorzugsweise keinen oder einen sehr verkleinerten Zwischenförderer auf, insbesondere da die beiden Transportspuren T2 und T3 vorzugsweise sehr eng bzw. (viel) enger als die Transportspuren T1 und T2 nebeneinander liegen, der Zwischenabstand also vorzugsweise geringer ist. Bei der Wechselrichtung 11 ist daher der Antrieb 15B der Fördereinrichtung 15 vorzugsweise nicht zwischen den zugeordneten Transportspuren T2 und T3, sondern vorzugsweise seitlich, insbesondere an der Transportspur T2 zur Transportspur T1 hin angeordnet.

Aus Vereinfachungsgründen sind in Fig. 4 die Hubeinrichtungen für die Hubtische 15C nicht dargestellt. Jedoch sind die Hubelemente bzw. Hubtische 15C und damit die Bänder bzw. Gurte 15A der Fördereinrichtung 15 bei der Wechseleinrichtung 11 vorzugsweise in entsprechender Weise anhebbar und absenkbar, wie dies bei der Transfereinrichtung 9 der Fall ist, so dass auf die diesbezügliche Beschreibung verwiesen wird.

Die Förderrichtung der Querförderung durch die Fördereinrichtung 15 kann bei der Wechseleinrichtung 11 ebenso wie bei der Transfereinrichtung 9 vorzugsweise geändert werden, der Antrieb 15B also in unterschiedlichen Richtungen arbeiten, um Linsenträger 5 wahlweise bzw. bedarfsweise von der zweiten Transportspur T2 zu der dritten Transportspur T3 oder umgekehrt wechseln bzw. fördern zu können.

Wie bereits erwähnt, können eine Wechseleinrichtung 11 und eine Transfereinrichtung 9 bzw. deren Fördereinrichtungen 15 zur Querförderung auch miteinander kombiniert werden bzw. eine Baueinheit bilden bzw. in Verlängerung zueinander angeordnet sein. In diesem Fall kann ein Hubtisch 15C entfallen. Weiter kann die Transfereinrichtung 9 dann einen Wechsel über die zweite bzw. mittlere Transportspur T2 hinweg in die dritte Transportspur T3 gestatten bzw. eine Wechseleinrichtung bilden.

Beim Darstellungsbeispiel ist der Abstand der ersten und zweiten Transportspur T1 und T2 vorzugsweise größer als der Abstand der zweiten und dritten Transportspur T2 und T3. Hierdurch kann dem Platzbedarf der Bearbeitungseinrichtungen 3 für die Aufnahme und Ablage von Linsen 2 auf der jeweiligen Fördereinrichtung 8 bzw. einem darauf angeordneten Linsenträger 5 Rechnung getragen werden. Insbesondere überbauen oder umschließen die Bearbeitungseinrichtungen 3 nämlich die jeweils zugeordnete Fördereinrichtung 8 zumindest teilweise, wie in den Darstellungsbeispielen gemäß Fig. 1 und Fig. 5 schematisch angedeutet.

Vorzugsweise können unter den Transportspuren T bzw. Fördereinrichtungen 10 und/oder Transfereinrichtungen 9 auch Vorratseinrichtungen oder Tanks oder dgl. für die Bearbeitungseinrichtungen 3 angeordnet werden.

Die Anlage 1 bzw. die Bearbeitungseinrichtungen 3 bildet bzw. bilden vorzugsweise eine Bearbeitungslinie B, insbesondere zusammen mit der Transfereinrichtung 4, um die Werkstücke bzw. Linsen 2 zu bearbeiten. Die in Fig. 1 beispielhaft dargestellte Bearbeitungslinie B verläuft hier insbesondere geradlinig, kann aber auch eine beliebige andere Anordnung, insbesondere je nach Bildung der Transportspuren T bzw. Gestaltung des Transfersystems 4 aufweisen. Insbesondere ist beispielsweise eine Anordnung über Eck, wie in Fig. 6 angedeutet, möglich.

Die Anlage 1 weist vorzugsweise die zentrale Anlagen- bzw. Systemsteuerung 21 auf. An diese sind vorzugsweise einzelne, mehrere oder alle Bearbeitungseinrichtungen 3 oder deren Maschinensteuerungen 20, beispielsweise über ein Datennetzwerk, ein (weiteres) Bussystem 25, eine Ethernet-Verkabelung oder dergleichen, angeschlossen. Vorzugsweise ist bzw. sind die Transfereinrichtung 4 bzw. Steuereinrichtung 12, insbesondere über das Bussystem 13, und/oder die Sensoren 16 oder dergleichen an die Systemsteuerung 21 angeschlossen, wie in Fig. 1 angedeutet.

Nachfolgend werden anhand der weiteren Figuren zunächst weitere Ausführungsbeispiele der vorschlagsgemäßen Anlage 1 erläutert. Hierbei wird jeweils insbesondere auf wesentliche Unterschiede und neue Aspekte näher eingegangen, so dass die bisherigen Ausführungen und Erläuterungen insbesondere entsprechend oder ergänzend gelten, auch wenn eine diesbezügliche Wiederholung weggelassen ist.

Fig. 5 zeigt in einer schematischen Darstellung ein anderes Ausführungsbeispiel der vorschlaggemäßen Anlage 1. Fig. 5 veranschaulicht, dass die vorschlagsgemäße Anlage 1 sehr leicht durch Integration oder Einbinden weiterer Bearbeitungseinrichtungen 3 ausgebaut - also erweitert - werden kann. Beispielsweise wurden hier an eine Bearbeitungs- oder Fertigungslinie endend mit der Ausgabestation 6 nachträglich (in Fig. 5 links davon) weitere Bearbeitungseinrichtungen 3, hier beispielhaft eine weitere Bearbeitungseinrichtung 3D zum Polieren und eine zusätzliche Bearbeitungseinrichtung 3G zum Beschichten, eingebunden. Das Transfersys.-tem 4 wurde entsprechend verlängert bzw. ergänzt. Die Abgabe 6 kann bedarfsweise dann auch umgebaut und beispielsweise am Ende angeordnet werden, wie gestrichelt durch Position 6' angedeutet.

Die vorschlagsgemäße Anlage 1 gestattet eine optimierte Bearbeitung und Ausnutzung der oft unterschiedlichen Bearbeitungskapazitäten der verschiedenen Bearbeitungseinrichtungen 3. Beispielsweise können Linsen 2 bzw. Linsenträger 5 mit Linsen 2 wahlweise an die ursprüngliche Bearbeitungseinrichtung 3D auf der rechten Seite oder an die weitere Bearbeitungseinrichtung 3D auf der linken Seite gefördert werden, wobei eine Hinförderung über die zweite Transportspur T2 und bei Bedarf eine Rückförderung insbesondere über die dritte Transportspur T3, beispielsweise zur anschließenden Bearbeitung in der rechten Bearbeitungseinrichtung 3F erfolgen kann.

Gemäß einem besonders bevorzugten Aspekt der vorliegenden Erfindung kann eine Zirkulation bzw. Kreisförderung K der Linsen 2 bzw. Linsenträger 5 über die zweite Transportspur T2 in eine Richtung und die dritte Transportspur T3 in die entgegengesetzte Richtung erfolgen. Insbesondere wird eine Zirkulation oder Kreisförderung K der Linsen 2 bzw. Linsenträger 5 durch entsprechende Querverbindungen oder Querförderungen zwischen den beiden Transportspuren T2 und T3 ermöglicht oder gebildet. Dies kann insbesondere eine Speicherung von Linsen 2 bzw. Linsenträgern 5 ermöglichen und/oder die Bildung von unerwünschten Stauungen verhindern oder minimieren. Insbesondere werden die Linsen 2 bzw. Linsenträger 5 nach Bedarf und/oder Verfügbarkeit an gewünschte Bearbeitungseinrichtungen 3 ausgeschleust bzw. gefördert. Dies erfolgt insbesondere durch entsprechende Querförderung und/oder einen Wechsel zur ersten Transportspur T1 bzw. zu einer der gewünschten Bearbeitungseinrichtung 3 zugeordneten oder vorgeordneten Transfereinrichtung 9.

Eine entsprechende Zirkulation oder Kreisförderung K von Linsen 2 bzw. Linsenträgern 5 ist bei der vorschlagsgemäßen Anlage 1 gemäß dem in Fig. 6 gezeigten, weiteren Ausführungsbeispiel bzw. gemäß dem vorschlagsgemäßen Verfahren vorzugsweise ebenfalls möglich oder vorgesehen.

In Fig. 6 ist schematisch angedeutet, dass bei der Zirkulation bzw. Kreisförderung K mehrere Linsenträger 5 zirkulieren bzw. in einem Kreislauf gefördert werden, beispielsweise so lange bis die nächste oder eine gewünschte Bearbeitungseinrichtung 3 zur Aufnahme bzw. Zuförderung für die passende Bearbeitung bereits ist.

Bei dem in Fig. 6 gezeigten Ausführungsbeispiel wurde eine ursprünglich, zumindest im Wesentlichen geradlinig aufgebaute Anlage 1 ergänzt oder erweitert, wobei der Erweiterungsabschnitt vorzugsweise abgewinkelt verläuft. Die Anlage 1 und die Transportspuren T weisen hier insbesondere also eine L-Form auf. Wie bereits erwähnt, sind jedoch auch andere insbesondere polygonale Anordnungen oder eben eine zumindest im Wesentlichen nur geradlinige Anordnung oder sonstige Anordnungen, insbesondere je nach baulichen Gegebenheiten, möglich. Beim Darstellungsbeispiel wurde die ursprüngliche Anlage 1 mit den ursprünglichen Bearbeitungseinrichtungen 3A, 3B, 3C, 3D, 3F und 3G (in Fig. 6 oben) beispielsweise um zusätzliche Bearbeitungseinrichtungen 3C, 3D und 3E (in Fig. 6 auf der linken Seite) ergänzt oder erweitert.

Die Erweiterung des Transfersystems 4 erfolgt beim Darstellungsbeispiel vorzugsweise über Verbindungseinrichtungen 22, insbesondere entsprechende Verlängerungen, Umlenkungen, Eckverbinder und/oder dgl., besonders bevorzugt um weitere Fördereinrichtungen 10 und/oder Transfereinrichtungen 9 o. dgl. anzuschließen, und/oder um die erste, zweite und/oder dritte Transportspur T zu verlängern. Besonders bevorzugt werden die Transportspuren T2 und T3 bzw. die mögliche oder bevorzugte Kreisförderung K entsprechend verlängert. Beim Darstellungsbeispiel endeten ursprünglich die Kreisförderung K und die Transportspuren T im Bereich der Abgabe 6. Erst die Erweiterung hat hier zu dem beispielhaft dargestellten L-förmigen Aufbau geführt.

Die erforderlichen zusätzlichen Transfereinrichtungen 9 bzw. Fördereinrichtungen 10 und/oder Wechseleinrichtungen 11 bei der Ergänzung des Transfersystems 4 werden vorzugsweise direkt an das Bussystem 13 angeschlossen. Dementsprechend kann der Aufwand für den Ausbau minimiert werden, also eine Erweiterung sehr einfach erfolgen.

Wie bereits erwähnt, erfolgt vorzugsweise eine unabhängige Steuerung des Transfersystems 4 einerseits und der Fördereinrichtungen 8 der Bearbeitungseinrichtungen 3 andererseits. Vorzugsweise ist vorgesehen, dass die Transfereinrichtungen 9, Fördereinrichtungen 10 und/oder Wechseleinrichtungen 11 von der vorzugsweisen zentralen Transfersteuereinrichtung 12, insbesondere einer speicherprogrammierbaren Steuerung, und/oder über das Bussystem 13 gesteuert werden und dass die Fördereinrichtungen 8 der Bearbeitungseinrichtungen 3 von der jeweiligen Bearbeitungseinrichtung 3 oder deren Maschinensteuerung 20 gesteuert werden. Insbesondere wird das Transfersystem 4 insgesamt von der Steuereinrichtung 12 gesteuert. Dies gestattet einen optimalen Ablauf und/oder eine sehr robuste, wenig störanfällige Steuerung. Des Weiteren erleichtert dies eine Erweiterung der Anlage 1.

Beim Darstellungsbeispiel sind ebenfalls einzelne, mehrere oder alle Bearbeitungseinrichtungen 3 oder deren Maschinensteuerungen 20 vorzugsweise an die zentrale Anlagen- bzw. Systemsteuerung 21 angeschlossen, beispielsweise über ein Datennetzwerk, ein (weiteres) Bussystem 25, eine Ethernet-Verkabelung oder dergleichen.

Bei der Systemsteuerung 21 kann es sich um einen Server, um ein Datenbanksystem oder dergleichen handeln.

Die Systemsteuerung 21 verwaltet insbesondere die von der Anlage 1 abzuarbeitenden Aufträge bzw. die von der Anlage 1 zu bearbeitenden Linsen 2 bzw. die für die Bearbeitung erforderlichen Informationen, beispielsweise Bearbeitungsdaten, Bearbeitungspläne bzw. Bearbeitungsreihenfolgen, Bearbeitungsstati, geplante oder erforderliche Bearbeitungsschritte, optische und/oder geometrische Informationen oder Daten der Linsen 2 und/oder sonstige Informationen, beispielsweise über einzusetzende oder verfügbare Werkzeuge o. dgl.

Vorzugsweise sind die Transfersteuerung bzw. Steuereinrichtung 12 einerseits und die Systemsteuerung 21 andererseits zum Informations- bzw. Datenaustausch miteinander gekoppelt, wie in Fig. 6 schematisch angedeutet.

Vorzugsweise kann die Systemsteuerung 21 das Transfersystem 4 bzw. die Transfereinrichtungen 9, Fördereinrichtungen 10 und/oder Wechseleinrichtungen 11 insbesondere über die Steuereinrichtung 12 derart steuern, dass gewünschte Linsen 2 bzw. Linsenträger 5 zu den jeweiligen Bearbeitungseinrichtungen 3, bedarfsweise nur auf entsprechende Anforderung der jeweiligen Bearbeitungseinrichtung 3 hin, gefördert werden.

Insbesondere können verschiedene oder alle Bearbeitungseinrichtungen 3 individuell Arbeitsaufträge bzw. zu bearbeitende Linsen 2 oder Linsenträger 5 mit zu bearbeitenden Linsen 2 selbsttätig vom Transfersystem 4 anfordern oder sich holen, die jeweilige erforderliche Bearbeitung durchführen und die Linse 2 nach der Bearbeitung wieder zurück auf das Transfersystem 4 schleusen bzw. an dieses übergeben.

Das Holen bzw. Anfordern von Linsen 2 zur Bearbeitung durch eine, mehrere oder ggf. alle Bearbeitungseinrichtungen 3 erfolgt also vorzugsweise selbsttätig bzw. unabhängig. Insbesondere kann eine Bearbeitungseinrichtung 3 selbsttätig insbesondere unter Berücksichtigung eines Bearbeitungsplans und Bearbeitungsstatus (diese Bearbeitungsdaten oder Informationen werden insbesondere von der Systemsteuerung 21 oder einer Datenbank, einem Datenspeicher o. dgl. abgefragt oder bereitgestellt) feststellen, ob eine (insbesondere sich in der Nähe oder kurz vor der Bearbeitungseinrichtung 3 befindende) Linse 2 zur Bearbeitung in der jeweiligen Bearbeitungseinrichtung 3 geeignet ist, um bei entsprechender Kapazität der Bearbeitungseinrichtung 3 diese bzw. den entsprechenden Linsenträger 5 anzufordern bzw. sich zufördern zu lassen.

Insbesondere können also mehrere Bearbeitungseinrichtungen 3 für die gleiche Bearbeitung unabhängig voneinander eine Linse 2 für die nächste Bearbeitung auswählen und/oder anfordern. Beim Darstellungsbeispiel erfolgt das Anfordern durch eine Bearbeitungseinrichtung 3 insbesondere dann, wenn diese freigefahren worden ist. Bei Bedarf kann das Anfordern jedoch auch schon vorher zur Minimierung von Wartezeiten erfolgen. Dann kann in der Zwischenzeit die nächste zu bearbeitende Linse 2 bzw. der entsprechende Linsenträger 5 insbesondere bereits der der Bearbeitungseinrichtung 3 vorgeordneten Transfereinrichtung 4 zugefördert bzw. von dieser aufgenommen werden und dort warten, bis die Bearbeitungseinrichtung 3 zur Aufnahme der nächsten Linse 2 bzw. des nächsten Linsenträgers 5 bereit ist.

Vorzugsweise gibt die jeweilige Bearbeitungseinrichtung 3 eine entsprechende Information oder ein entsprechendes Signal an die Steuereinrichtung 12 aus, wenn eine Linse 2 oder ein Linsenträger 5 nach der Bearbeitung an die nachgeordnete Transfereinrichtung 9 bzw. an das Transfersystem 4 abgegeben werden soll oder bereits abgegeben wurde. Je nach Kapazität wird dann die jeweilige Linse 2 bzw. der jeweilige Linsenträger 5 von dem Transfersystem 4 bzw. der der jeweiligen Bearbeitungseinrichtung 3 nachgeordneten Transfereinrichtung 9 aufgenommen, beispielsweise in den Aufnahmebereich 19, und/oder weitergefördert, beispielsweise zu einer nachgeordneten Bearbeitungseinrichtung 3 und/oder in die zweite Transportspur T2 oder die Kreisförderung K wieder eingeschleust. Dies kann wahlweise durch das Transfersystem 4 bzw. deren Steuereinrichtung 12 selbstständig und/oder in Abstimmung und/oder in Abhängigkeit von der Systemsteuerung 21 erfolgen.

Des Weiteren wird der zur Aufnahme einer Linse 2 bzw. eines Linsenträgers 5 bereiten Bearbeitungseinrichtung 3 dann wieder eine Linse 2 bzw. ein Linsenträger 5 zugefördert, wobei die Auswahl - wie bereits erwähnt - besonders bevorzugt durch die jeweilige Bearbeitungseinrichtung 3 bzw. deren Maschinensteuerung 20 und/oder durch die Systemsteuerung 21, besonders bevorzugt unter Berücksichtigung von für die Bearbeitung relevanten Daten, wie Bearbeitungsplan und Bearbeitungszustand, insbesondere aus der Systemsteuerung 21, erfolgt. Die Steuerung der Zuförderung erfolgt dann vorzugsweise über die Steuereinrichtung 12, kann bedarfsweise aber auch von der jeweiligen Bearbeitungseinrichtung 3 bzw. deren Maschinensteuerung 20 gesteuert werden, wie später noch anhand eines anderen Ausführungsbeispiels gemäß Fig. 7 näher erläutert.

Alternativ oder zusätzlich kann die jeweilige Bearbeitungseinrichtung 3 bei der Zu- und Abförderung von Linsen 2 bzw. Linsenträgern 5 bzw. bei der Ansteuerung der vorgeordneten und/oder nachgeordneten Transfereinrichtung 9 oder Fördereinrichtung 14 Vorrang beispielsweise vor einer nachgeordneten oder vorgeordneten Bearbeitungseinrichtung 3 und/oder vor der Transfersteuerung bzw. Steuereinrichtung 12 haben.

Besonders bevorzugt übergibt eine Bearbeitungseinrichtung 3 bzw. deren Fördereinrichtung 8 nach der Bearbeitung eine Linse 2 bzw. einen Linsenträger 5 an das Transfersystem 4 bzw. an eine - vorzugsweise in Förderrichtung F1 nachgeordnete - Transfereinrichtung 9, sofern oder sobald dort Platz zur Aufnahme ist, insbesondere wenn der jeweilige bzw. zugeordnete Aufnahmebereich 19 frei ist. Hierzu kommuniziert die Bearbeitungseinrichtung 3 bzw. deren Maschinensteuerung 20 vorzugsweise über die Systemsteuerung 21 oder direkt mit der Transfersteuerung bzw. Steuereinrichtung 12 bzw. dem Transfersystem 4 oder der jeweiligen Transfereinrichtung 9.

Nach dem Freifahren der Bearbeitungseinrichtung 3 bzw. deren Fördereinrichtung 8 kann diese wieder die nächste Linse 2 bzw. den nächsten Linsenträger 5 aufnehmen. Die Zuförderung erfolgt insbesondere über das Transfersystem 4 bzw. die vorgeordnete Transfereinrichtung 9. Die Auslösung der Zuförderung erfolgt vorzugsweise durch eine Anforderung der jeweiligen Bearbeitungseinrichtung 3 oder durch die Systemsteuerung 21, wenn diese erkannt bzw. mitgeteilt bekommen hat, dass die Bearbeitungseinrichtung 3 bzw. deren Fördereinrichtung 8 freigefahren worden ist.

Es ist anzumerken, dass die Fördereinrichtungen 8 der Bearbeitungseinrichtungen 3 insbesondere auch mehrere Linsen 2 bzw. Linsenträger 5 mit Linsen 2 bedarfsweise (gleichzeitig) aufnehmen können. Der Begriff "Freifahren" ist dann dementsprechend dahingehend zu verstehen, dass die jeweilige Bearbeitungseinrichtung 3 bzw. deren Fördereinrichtung 8 zur Aufnahme einer Linse 2 bzw. eines Linsenträgers 5 bereit ist, selbst wenn sich noch eine oder mehrere Linsen 2 bzw. Linsenträger 5 in der Bearbeitungseinrichtung 3 bzw. deren Fördereinrichtung 8 befinden.

Wie bereits erwähnt, kann die Zuförderung beim Darstellungsbeispiel insbesondere wahlweise von dem Aufnahmebereich 19 einer vorgeordneten Transfereinrichtung 9 oder durch Querförderung über die Fördereinrichtung 15 und anschließende Längsförderung über die Fördereinrichtung 14 der vorgeordneten Transfereinrichtung 9, also durch Zuförderung von der zweiten Transportspur T2, erfolgen.

Vorzugsweise steuert die Steuereinrichtung 12 und/oder die Anforderung der jeweiligen Bearbeitungseinrichtung 3 und/oder eine Priorisierung von Bearbeitungen bzw. Linsen 2 durch die Systemsteuerung 21 den Ablauf bzw. die Zuförderung.

Die bereits zuvor von der Bearbeitungseinrichtung 3 bearbeitende Linse 2 bzw. der diese tragende Linsenträger 5 kann von der nachgeordneten Transfereinrichtung 9 aufgenommen und bei Bedarf im Aufnahmebereich 19 zwischengespeichert werden. Jedoch kann ggf. auch direkt eine Weiterförderung ohne Anhalten erfolgen.

Die Weiterförderung kann darin bestehen, dass die Linse 2 bzw. der Linsenträger 5 an die nächste Bearbeitungseinrichtung 3, also in die Förderrichtung F1 weiter entlang der ersten Transportspur T1 weitergefördert wird, also der nächsten Bearbeitungseinrichtung 3 bzw. deren Fördereinrichtung 8 zugefördert wird. Alternativ kann auch eine Querförderung mittels der Fördereinrichtung 15 und ein Wechsel in die zweite Transportspur T2 und ggf. weiter in die dritte Transportspur T3 erfolgen. So kann dann eine Weiterförderung zu einer anderen Bearbeitungseinrichtung 3 oder ggf. zur Abgabe 6 erfolgen.

Vorzugsweise erfolgt eine Weiterförderung über die zweite und/oder dritte Transportspur T2, T3, wenn eine Zuförderung zu einer anderen Bearbeitungseinrichtung 3 gewünscht oder erforderlich ist, beispielsweise aufgrund eines Ausfalls einer Bearbeitungseinrichtung 3 oder unterschiedlicher Ausrüstungen oder unterschiedlicher Werkzeuge der Bearbeitungseinrichtungen 3, oder beispielsweise aufgrund einer gewünschten oder erforderlichen Bearbeitungsreihenfolge bzw. eines gewünschten oder erforderlichen Bearbeitungsablaufs.

Fig. 7 zeigt in einer schematischen Darstellung noch ein anderes Ausführungsbeispiel der vorschlagsgemäßen Anlage 1. Vorzugsweise weisen einzelne, mehrere oder alle Transfereinrichtungen 9 neben der jeweiligen Fördereinrichtung 15 zur Querförderung jeweils zusätzlich eine Fördereinrichtung 15' zur Querförderung auf. Beide Fördereinrichtungen 15 und 15' einer Transfereinrichtung 9 sind vorzugsweise unabhängig voneinander betreibbar. Dies ermöglicht, dass die jeweilige Bearbeitungseinrichtung 3 die vorgeordnete Querförderung über die vorgeordnete Fördereinrichtung 15 und die nachgeordnete Querförderung über die nachgeordnete Fördereinrichtung 15' jeweils direkt bzw. selbstständig steuert, insbesondere unabhängig von der in Fig. 7 nicht dargestellten Transfersteuerung bzw. Steuereinrichtung 12. So wird ein selbstständiges Ausschleusen von Linsen 2 bzw. Linsenträgern 5 aus der Zirkulation bzw. Kreisförderung K und/oder ein selbstständiges Zurückfördern oder Wiedereinschleusen von Linsen 2 bzw. Linsenträgern 5 in die Zirkulation bzw. Kreisförderung K durch die jeweilige Bearbeitungseinrichtung 3 bzw. deren Maschinensteuerung 20 ermöglicht. Für die Bearbeitungseinrichtungen 3C und 3D ist daher beispielshaft in Fig. 7 angedeutet, dass die jeweilige Maschinensteuerung 20 an die zugeordnete Fördereinrichtung 15 und 15' angeschlossen ist.

Die zugeordnete bzw. dazwischen angeordnete Fördereinrichtung 14 ist optional vorgesehen, kann also auch entfallen, und wird vorzugsweise von der vor- oder nachgeordneten Bearbeitungseinrichtung 3 bzw. deren Maschinensteuerung 20 gesteuert.

Alternativ oder zusätzlich wird besonders bevorzugt eine Erfassung von Linsen 2 bzw. Linsenträgern 5 über insbesondere ebenfalls an die Maschinensteuerung 20 angeschlossene Sensoren 16 ermöglicht. Mittels der Sensoren 16 ist es beispielsweise möglich, in der Transportspur T2 bzw. Zirkulation oder Kreisförderung K befindliche Linsen 2 bzw. Linsenträger 5 zu identifizieren und für die Bearbeitung in der jeweiligen Bearbeitungseinrichtung 3 geeignete Linsen 2 bzw. Linsenträger 5 auszuschleusen bzw. in die erste Transportspur T2 wechseln zu lassen, insbesondere unabhängig von anderen Bearbeitungseinrichtungen 3 bzw. deren Maschinensteuerung 20 und/oder unabhängig von der Transfersteuerung bzw. Steuereinrichtung 12 und/oder unabhängig von der Systemsteuerung 21.

Die Maschinensteuerung 20 sind vorzugsweise der jeweiligen Bearbeitungseinrichtung 3 zugeordnet oder in dieser angeordnet, können aber auch davon getrennt oder zentral angeordnet sind.

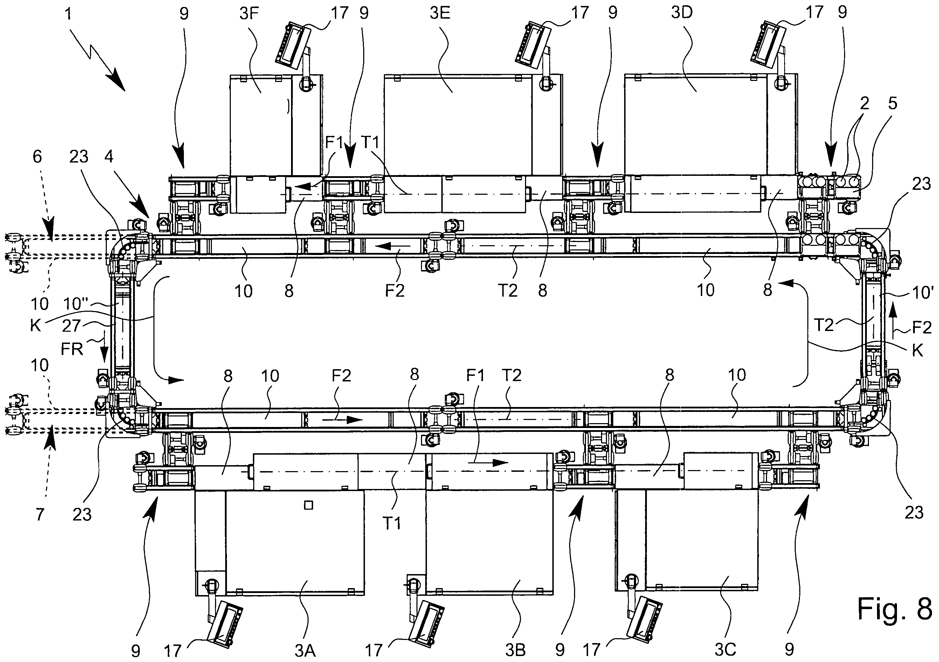

Fig. 8 zeigt in einer schematischen Darstellung ein weiteres Ausführungsbeispiels der vorschlagsgemäßen Anlage 1. Bei diesem Ausführungsbeispiel wird vorzugsweise eine zumindest im Wesentlichen U-förmige Anordnung, insbesondere der ersten oder zweiten Transportspur T1 bzw. T2 gebildet.

Vorzugsweise sind zwei Gruppen oder Reihen von Bearbeitungseinrichtungen 3, hier beispielsweise eine erste Gruppe von Bearbeitungseinrichtungen 3A, 3B und 3C und eine zweite Gruppe von Bearbeitungseinrichtungen 3D, 3E und 3F, einander gegenüberliegend und/oder mit auf einander zugewandten Seiten angeordneten Fördereinrichtungen 8 gebildet oder angeordnet und/oder derart angeordnet, dass die zugeordneten Transportspuren T1 und/oder T2 der beiden Gruppen vorzugsweise parallel zueinander verlaufen.

Vorzugsweise weist die Anlage 1 bzw. das Transfersystem 4 eine Querverbindung der beiden Gruppen von Bearbeitungseinrichtungen 3 über eine Fördereinrichtung 10' und/oder 10" quer bzw. miteinander verbunden.

Vorzugsweise bildet die Fördereinrichtung 10' einen Schenkel oder Abschnitt der vorzugsweise zumindest im Wesentlichen U-förmigen Anordnung oder einen Teil des vorzugsweise im Wesentlichen U-förmigen Verlaufs der ersten oder zweiten Transportspur T1 bzw. T2, hier der zweiten Transportspur T2. Bedarfsweise können an diesem Abschnitt auch ein oder mehrere Bearbeitungseinrichtungen 3 angeordnet sein.

Vorzugsweise weist die Anlage 1 bzw. das Transfersystem 4 eine Rückförderverbindung 27 auf.

Vorzugsweise weist die Rückförderverbindung 27 die (zweite) Fördereinrichtung 10" auf bzw. wird dadurch gebildet.

Vorzugsweise ist bei dem dargestellten Ausführungsbeispiel eine Zirkulation bzw. Kreisförderung K, besonders bevorzugt über die erste oder zweite Transportspur T1 bzw. T2 möglich. Beim Ausführungsbeispiel ist hierzu die Rückförderverbindung 27 für die erste oder zweite Transportspur T1 bzw. T2 (beim Darstellungsbeispiel nur für die zweite Transportspur T2) vorgesehen. Hier ermöglicht die Rückförderverbindung 27 eine Rückförderung in die Rückförderrichtung FR, so dass die Kreisförderung K der Linsen 2 bzw. Linsenträger 5 über die zweite Transportspur T2 ohne Umkehr der Förderrichtung F2 und ohne Wechsel in die entgegengesetzte Förderrichtung F3 ermöglicht wird.

Beim dargestellten Ausführungsbeispiel weist die Anlage 1 bzw. das Transfersystem 4 vorzugsweise eine Aufnahme 7 und/oder Abgabe 6 bzw. entsprechende Fördereinrichtungen 10 (in Fig. 8 gestrichelt auf der linken Seite angedeutet) als Einlauf- und/oder Auslaufstrecke für Linsen 2 bzw. Linsenträger 5 auf.

Die Rückförderverbindung 27 bzw. Fördereinrichtung 10" ist besonders bevorzugt im Bereich des Anfangs und/oder Endes der Transportspur T1 bzw. T2 und/oder der üblichen Bearbeitung und/oder im Bereich der Aufnahme 7 bzw. Abgabe 6 angeordnet. Besonders bevorzugt ist die Rückförderverbindung R bzw. Fördereinrichtung 10" über entsprechende Weichen angeschlossen. Jedoch sind auch andere konstruktive Lösungen und/oder Anordnungen möglich, insbesondere je nach Lage und Ausbildung bzw. Anordnung der Aufnahme 7 und/oder Abgabe 6.

Bei dem Ausführungsbeispiel gemäß Fig. 8 gestattet die Rückförderverbindung 27 die Kreisförderung K bzw. Zirkulation der Linsen 2 bzw. Linsenträger 5. Dementsprechend ist eine dritte Transportspur T3 zur Rückförderung bzw. Zirkulation nicht erforderlich. Jedoch können die Rückförderverbindung 27 und die dritte Transportspur T3 bedarfsweise auch kombiniert oder ergänzend eingesetzt werden, insbesondere je nach baulichen Gegebenheiten und/oder vorhandenen Bearbeitungseinrichtungen 3.

Die Rückförderverbindung 27 kann bei Bedarf auch an einer anderen Stelle angeordnet sein bzw. nur einen Kreislauf für einige der Bearbeitungseinrichtungen 3 bilden, beispielsweise einerseits zwischen der Bearbeitungseinrichtung 3B und 3C und andererseits zwischen der Bearbeitungseinrichtung 3D und 3E angeschlossen sein, je nach Bedarf also auch einen kürzeren oder kleineren Kreislauf bilden oder ermöglichen.

Bedarfsweise können auch mehrere derartige Querverbindungen bzw. Rückförderverbindungen 27 vorgesehen sein oder werden. Hierdurch können bedarfsweise auch zusätzliche Speicherstrecken gebildet werden.

Vorzugsweise weist die Anlage 1 bzw. das Transfersystem 4 Fördereinrichtungen 23 zur Kurvenförderung auf, insbesondere um gerade Abschnitte der jeweiligen Transportspur, hier T2, und/oder verschiedene Fördereinrichtungen 10, 10' und/oder 10" und/oder die Rückförderverbindung 27 mit der Transportspur T2 zu verbinden. Durch die Kurvenförderung kann erreicht werden, dass die Ausrichtung der Linsen 2 bzw. Linsenträger 5 bezüglich der jeweiligen Förderrichtung F gleichbleibt also beispielsweise bei einem Linsenträger 5 mit zwei Linsen 2 immer die selbe Linse 2 vorne ist.

Die beiden Gruppen von Bearbeitungseinrichtungen 3 bzw. die beiden Schenkel der besonders bevorzugt U-förmigen Anordnung sind beim Darstellungsbeispiel vorzugsweise relativ nah beieinander angeordnet und/oder derart beabstandet, dass der Zwischenraum eine Zugangsmöglichkeit für einen nicht dargestellten Bediener bildet. Insbesondere sind hierzu die Querverbindungen bzw. Fördereinrichtungen 10' und/oder 10" derart ausgebildet, dass diese bei Bedarf gelöst oder geöffnet oder weggeklappt werden können. Alternativ oder zusätzlich können diese auch höher oder tiefergelegt und beispielsweise über entsprechende Vertikalförderer oder Gefällestrecken angeschlossen sein, so dass ein vorzugsweise freier Zugang zu dem Zwischenraum ermöglicht wird.

Alternativ oder zusätzlich kann der Zwischenraum auch für Betriebsmittelbehälter für Bearbeitungseinrichtungen 3 genutzt werden, beispielsweise für einen Kühlmittelbehälter, einen Behälter für Späne, einen Behälter für Kühlflüssigkeit oder dergleichen. Die Behälter können insbesondere im Zwischenraum und/oder unterhalb des Transfersystems, besonders bevorzugt unterhalb der zweiten Transportspur T2 angeordnet sein.

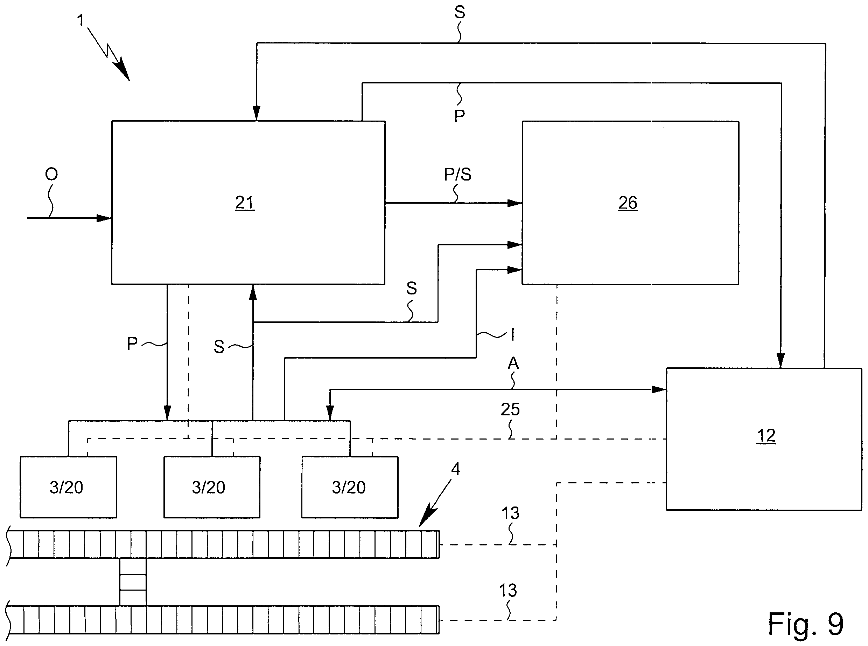

Fig. 9 zeigt in einer sehr schematischen Darstellung ein Blockschaltbild eines bevorzugten Steuerungsaufbaus einer vorschlagsgemäßen Anlage 1.

Wie bereits erwähnt, weist die Anlage 1 bzw. das Transfersystem 4 vorzugsweise eine insbesondere zentrale Transfer- bzw. Steuereinrichtung 12 auf. Hierbei handelt es sich insbesondere um einen sogenannten Band-Leitrechner. Bedarfsweise kann es sich auch um ein Programm und/oder mehrere vernetzte Computer, Rechner, Steuerungen o. dgl. handeln.

Die Transfer- bzw. Steuereinrichtung 12 dient insbesondere der Steuerung des Produktionsflusses bzw. der Förderung der Linsen 2 bzw. Linsenträger 5, wie der Zirkulation bzw. Kreisförderung K und/oder Förderung von Linsen 2 bzw. Linsenträgern 5 zu Bearbeitungseinrichtungen 3 und von diesen weg.

Besonders bevorzugt steuert die Steuereinrichtung 12 die Transfereinrichtungen 9, Fördereinrichtungen 10 und/oder Wechseleinrichtungen 11, Fördereinrichtungen 14 zur Längsförderung, Fördereinrichtungen 15 zur Querförderung und/oder Stoppeinrichtungen 18, wobei die Transfereinrichtungen 9 vorzugsweise ergänzend oder alternativ auch von den Bearbeitungseinrichtungen 3 bzw. deren Maschinensteuerung 20 - insbesondere bei Anschluss an das Bussystem 13 - (direkt) gesteuert werden können.

Die Anlagen- bzw. Systemsteuerung 21 ist vorzugsweise über das (weitere) Bussystem 25 mit den Bearbeitungseinrichtungen 3 bzw. deren Maschinensteuerungen 20 gekoppelt oder verbunden. Jedoch sind hier auch andere Arten der Verbindung möglich.

Die Steuereinrichtung 12 kann mit der Systemsteuerung 21 ebenfalls über das Bussystem 25 oder eine separate Verbindung zum Datenaustausch verbunden sein.

Optional kann die Steuereinrichtung 12 auch von der Systemsteuerung 21 gebildet oder in diese integriert sein.

Die Systemsteuerung 21 bildet vorzugsweise ein Linsenmanagementsystem und/oder eine Anlagensteuerung.

Die Systemsteuerung 21 dient insbesondere der Annahme oder Erfassung von Aufträgen O und/oder der Verwaltung von Aufträgen O, Produktionsdaten P und/oder Linsenrohlingen und/oder der Bereitstellung von Schnittstellen zu anderen Systemen, beispielsweise zu Systemen oder Modulen für das Linsendesign, die insbesondere in Abhängigkeit von gewünschten optischen Eigenschaften die gewünschte geometrische Gestalt von Linsen 2 und/oder die erforderlichen Bearbeitungen bzw. Bearbeitungsschritte bestimmen.

Insbesondere werden in der Systemsteuerung 21 (oder einem sonstigen Server oder Datenspeicher) Produktionsdaten P, die insbesondere Bearbeitungspläne (Bearbeitungsschritte und/oder -reihenfolgen oder -abfolgen) und Bearbeitungsstati (Bearbeitungszustände bzw. Informationen über als nächstes auszuführende Bearbeitungen) beinhalten, verwaltet und/oder erzeuget.

Die Produktionsdaten P werden insbesondere von der Systemsteuerung 21 den Bearbeitungseinrichtungen 3 bzw. deren Maschinensteuerungen 20 zur Verfügung gestellt und/oder können von diesen abgefragt werden, wie durch einen entsprechenden Pfeil in Fig. 9 schematisch angedeutet.

Die Anlage 1 oder Systemsteuerung 21 weist vorzugsweise ein Kontrollcenter 26 auf.

Der Status der Bearbeitungseinrichtungen 3, insbesondere der Bearbeitungsstatus bzw. Produktionsstatus, die Verfügbarkeit der jeweiligen Bearbeitungseinrichtung 3, die Befähigung bzw. Werkzeugausstattung, die möglichen Bearbeitungen und/oder sonstige ähnliche Informationen, werden als Statusinformationen S von den Bearbeitungseinrichtungen 3 bzw. deren Maschinensteuerung 20 insbesondere an die Systemsteuerung 21, wie durch einen entsprechenden Pfeil in Fig. 9 angedeutet, und/oder an das Kontrollcenter 26 zur Anzeige und/oder Verwaltung übermittelt.

Das Kontrollcenter 26 dient insbesondere der Visualisierung und/oder Verwaltung von Maschinenzuständen, also Zuständen der Bearbeitungseinrichtungen 3, Produktionsdaten P, Prozessdaten und/oder sonstiger Informationen I.

Weiter dient das Kontrollcenter 26 vorzugsweise der Verwaltung von Makros und/oder dem Berichtswesen.

Bei dem Kontrollcenter 26 kann es sich um entsprechende Programme, Anwendungen oder dergleichen und/oder um einen oder mehrere Rechner, wie einen Server oder dergleichen, handeln. Entsprechendes gilt auch für die Systemsteuerung 21 und/oder Steuereinrichtung 12.

Optional kann das Kontrollcenter 26 auch von der Systemsteuerung 21 gebildet und/oder (nur) über diese an die Anlage 1 angeschlossen sein.

Die Bearbeitungseinrichtungen 3 bzw. deren Maschinensteuerungen 20 können vorzugsweise auch Informationen I, wie Prozessdaten u. dgl., dem Kontrollcenter 26 mitteilen, wie durch einen entsprechenden Pfeil in Fig. 9 angedeutet.

Zum Informations- bzw. Datenaustausch kann das Kontrollcenter 26 auch an das Bussystem 25 angeschlossen sein. Alternativ oder zusätzlich kann der Datenaustausch auch über die Systemsteuerung 21 erfolgen.

Vorzugsweise können die Systemsteuerung 21 und das Kontrollcenter 26 Produktionsdaten P und/oder sonstige Daten, wie Statusinformationen S, beispielsweise zum Auftragsstatus, wie durch Pfeil P/S in Fig. 9 angedeutet, austauschen.

Vorzugsweise können die Systemsteuerung 21 und die Steuereinrichtung 12 Produktionsdaten P, wie durch einen entsprechenden Pfeil in Fig. 9 angedeutet, und/oder Statusinformationen S, insbesondere Daten zum Auftragsstatus, wie durch einen entsprechenden Pfeil A in Fig. 9 angedeutet, austauschen und/oder abgleichen.

Zum Datenaustausch ist die Steuereinrichtung 12 vorzugsweise auch an das weitere Bussystem 25 und/oder auf sonstige Weise angeschlossen bzw. zum Datenaustausch verbunden oder verbindbar.

Vorzugsweise können die Bearbeitungseinrichtungen 3 bzw. deren Maschinensteuerungen 20 Auftragsinformationen A, wie Informationen zum Status, insbesondere Auftragsstatus, Anfragen und/oder Anforderungen, wie durch einen entsprechenden Pfeil in Fig. 9 angedeutet, austauschen. Besonders bevorzugt können Anfragen und Auftragsinformationen A an die Steuereinrichtung 12 übermittelt bzw. dieser mitgeteilt und/oder eine Anforderung einer Linse 2 bzw. eines Linsenträgers 5 an die Steuereinrichtung 12 übermittelt werden. Alternativ oder zusätzlich können Informationen über vorzugsweise von den Sensoren 16 erfasste oder identifizierte Linsen 2 bzw. Linsenträger 5 von den Sensoren 16 direkt oder über die Steuereinrichtung 12 an einzelne, mehrere oder alle Bearbeitungseinrichtungen 3 bzw. deren Maschinensteuerung 20 übermittelt oder diesen bereitgestellt werden. Dieser Informationsaustausch erfolgt insbesondere im Rahmen der Anforderung von neuen Linsen 2 bzw. Linsenträgern 5 durch die Bearbeitungseinrichtungen 3, wie durch die Doppelpfeil A in Fig. 9 angedeutet. Dieser Informationsaustausch kann auch unter Berücksichtigung von weiteren Daten oder Informationen, insbesondere von Prozessdaten P, besonders bevorzugt Bearbeitungsplänen und Bearbeitungsstati, die vorzugsweise durch die Systemsteuerung 21 bereitgestellt werden, erfolgen.

Insbesondere können die Bearbeitungseinrichtungen 3 vorzugsweise selbstständig neue Aufträge bzw. Linsen 2 zur Bearbeitung auswählen und/oder anfordern. Dies ermöglicht gemäß einem besonders bevorzugten Aspekt ein quasi beliebiges bzw. unabhängiges Einklinken bzw. Einfügen von Bearbeitungseinrichtungen 3 in die Anlage 1.

Die vorschlagsgemäße Anlage 1 und das vorschlagsgemäße Verfahren zur Bearbeitung optischer Linsen 2 ist sehr flexibel. Insbesondere kann eine verbesserte oder optimierte Ausnutzung von Bearbeitungskapazitäten erreicht werden. Des Weiteren wird eine sehr flexible Bearbeitung und Anpassung an verschiedene Gegebenheiten ermöglicht. Beispielsweise können Stillstandzeiten oder Ausfälle einzelner Bearbeitungseinrichtungen 3 sehr leicht und/oder in optimaler Weise kompensiert werden, insbesondere sofern andere oder alternative Bearbeitungseinrichtungen 3 zur Verfügung stehen. Alternativ oder zusätzlich kann eine intelligente Schwerpunktsteuerung erfolgen, beispielsweise dahingehend, dass eine für eine bestimmte Bearbeitung besonders geeignete Bearbeitungseinrichtung 3 primär für diese Bearbeitung eingesetzt wird, also beispielsweise eine Drehmaschine mit einem besonders großen Spannraum zur Bearbeitung von besonders lange oder sperrige Späne bei der Bearbeitung erzeugenden Linsen 2.

Die vorschlagsgemäße Anlage 1 und das vorschlagsgemäße Verfahren erlauben insbesondere eine sehr große Flexibilität auch bei der Bearbeitung von Linsen 2 mit unterschiedlichen Formen und/oder aus unterschiedlichen Materialien. Insbesondere können die bisher üblichen Bearbeitungs- oder Fertigungslinien vermieden werden, die primär auf die Bearbeitung von Linsen 2 aus einem bestimmten Material oder von Linsen 2 einer bestimmten Form ausgerichtet sind.

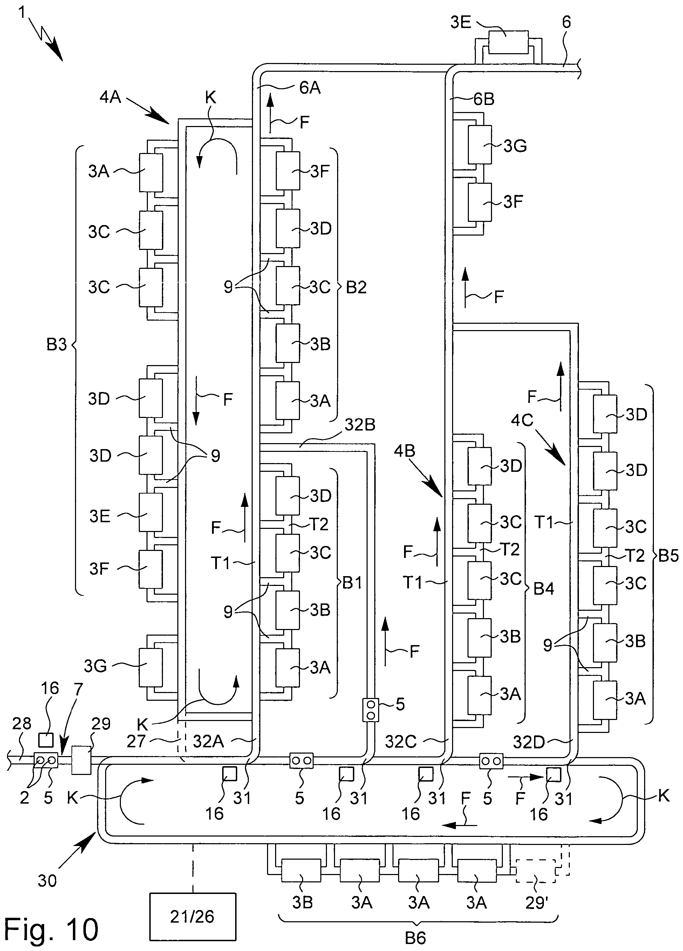

Eine weitere Ausführungsform der vorschlagsgemäßen Anlage 1 wird nachfolgend anhand von Fig. 10 erklärt, wobei primär nur auf wesentliche Unterschiede bzw. neue Aspekte näher eingegangen wird, so dass die bisherigen Ausführungen und Erläuterungen insbesondere entsprechend oder ergänzend gelten, auch wenn eine diesbezügliche Wiederholung weggelassen ist.

Bei der Ausführung gemäß Fig. 10 weist die vorschlagsgemäße Anlage 1 vorzugsweise ein insbesondere vorgeordnetes oder zentrales Transportsystem 30 und mehrere daran angeschlossene Bearbeitungslinien B, hier die Bearbeitungslinien B1 bis B5, auf.

Mehrere oder alle Bearbeitungslinien B weisen jeweils mehrere verschiedene und/oder gleichartige Bearbeitungseinrichtungen 3 auf, wie beispielhaft in Fig. 10 angedeutet, insbesondere durch unterschiedliche Bearbeitungseinrichtungen 3A bis 3G im bereits verwendeten Sinne. Beispielsweise weist die Bearbeitungslinie B3 oder B5 mehrere Bearbeitungseinrichtungen 3 auf, wobei mindestens zwei Bearbeitungseinrichtungen 3, hier zwei Bearbeitungseinrichtungen 3C zum formgebenden Bearbeiten, beispielsweise durch Fräsen und/oder Drehen, und/oder zwei Bearbeitungseinrichtungen 3D zum Polieren, gleich oder gleichartig ausgebildet sind.

Den Bearbeitungseinrichtungen 3 der Bearbeitungslinien B werden die Werkstücke bzw. Linsen 2 bzw. Linsenträger 5 über ein entsprechendes Transfersystem 4, insbesondere mehrere Transfersysteme 4A, 4B und 4C zugefördert, und von diesem bzw. diesen wieder weggefördert, insbesondere wie bereits anhand der anderen Ausführungsformen ausführlich erläutert.

Insbesondere kann ein Transfersystem 4, hier beim Darstellungsbeispiel das Transfersystem 4A, mehreren Bearbeitungslinien B, hier den Bearbeitungslinien B1, B2 und B3, zugeordnet sein und/oder eine Ringanordnung bzw. Ringförderung oder Kreisförderung K bilden.

Alternativ oder zusätzlich kann einem Transfersystem 4 auch nur eine Bearbeitungslinie B zugeordnet sein. Beim Darstellungsbeispiel ist dem Transfersystem 4B (nur) die Bearbeitungslinie B4 und dem Transfersystem 4C (nur) die Bearbeitungslinie B5 zugeordnet.

Besonders bevorzugt weist die jeweilige Bearbeitungslinie B auch ein zugeordnetes Transfersystem 4 auf.

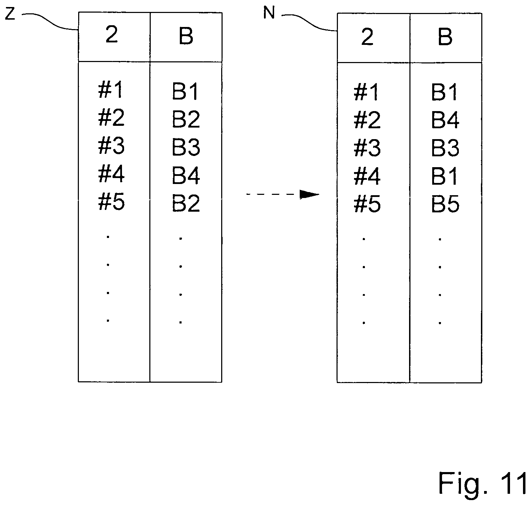

Das Transportsystem 30 ist den Bearbeitungslinien B bzw. Transfereinrichtungen 4 vorgeordnet, um die zu bearbeitenden Werkstücke bzw. Linsen 2 bzw. damit versehenen Träger 5 diesen - also den Bearbeitungslinien B und/oder Transfereinrichtungen 4 - wahlweise bzw. bedarfsgerecht zuzufördern. Diese Zuförderung folgt insbesondere gemäß einer Zuordnung Z, wie beispielhaft in Fig. 11 angedeutet.

Besonders bevorzugt sind einige oder alle Bearbeitungslinien B und/oder Transfersysteme 4 über einen oder mehrere Abzweige 31 und Zuläufe 32, insbesondere über einen Abzweig 31 und einen eigenen Zulauf 32, an das Transportsystem 30 angeschlossen, so dass einzelnen, mehreren oder allen Bearbeitungslinien B vorzugsweise separat und/oder direkt die zu bearbeitenden Werkstücke bzw. Linsen 2 bzw. damit versehene Träger 5 zuförderbar sind.

Bei der in Fig. 10 dargestellten Ausführungsform sind beispielsweise die Bearbeitungslinien B1, B2 und B3 bzw. das Transfersystem 4A über einen Abzweig 31 und den Zulauf 32A sowie über einen weiteren Abzweig 31 und den Zulauf 32B an das Transportsystem 30 angeschlossen. Beispielsweise ist hier über den Zulauf 32A die Bearbeitungslinie B1 und über den Zulauf 32B die Bearbeitungslinie B2 jeweils direkt mit zu bearbeitenden Werkstücken bzw. Linsen 2 versorgbar. Diese direkte Zuförderung bzw. Versorgung von Bearbeitungslinien B ist hinsichtlich eines optimierten Ablaufs und/oder einer besonders guten Anlagenauslastung vorteilhaft und stellt einen besonders bevorzugten, auch unabhängig realisierbaren Aspekt der vorliegenden Erfindung dar.

Weiter ist es aber auch möglich, dass Bearbeitungslinien B nur indirekt angeschlossen sind bzw. mit zu bearbeitenden Werkstücken bzw. Linsen 2 versorgt werden. Beispielsweise ist hier die Bearbeitungslinien B3 indirekt über die anderen Bearbeitungslinien B1, B2 bzw. das zugeordnete Transfersystem 4A angeschlossen, verfügt also über keinen eigenen bzw. separaten Zulauf 32.

Die Bearbeitungslinie B bzw. mehrere Bearbeitungslinien B, hier die Bearbeitungslinien B1, B2 und B3 bzw. deren Transfersystem 4A, bildet bzw. bilden vorzugsweise eine Ringanordnung und/oder gestattet bzw. gestatten eine Kreisförderung K, wie bereits bei anderen Ausführungsformen beschrieben und wie in Fig. 10 angedeutet.

Eine Ringanordnung bzw. Kreisförderung K ist jedoch nicht unbedingt erforderlich, auch wenn diese vorteilhaft und/oder bevorzugt ist. Beispielsweise bilden jeweils die Transfersysteme 4B und 4C mit den zugeordneten Bearbeitungslinien B4 und B5 keine Ringanordnung oder Kreisförderung K, sondern sonstige, hier insbesondere lineare oder gradlinige Anordnungen, die beispielsweise nebeneinander oder hintereinander angeordnet sein können.

Einige oder alle Bearbeitungslinien B bzw. Transfersysteme 4 können die bearbeiteten Werkstücke bzw. Linsen 2 vorzugsweise an separate und/oder gemeinsame Abgaben 6, 6A und 6B, wie beispielhaft in Fig. 10 angedeutet, aus- bzw. abgeben.

Alternativ oder zusätzlich können einzelne Bearbeitungseinrichtungen 3 einzelnen oder mehreren Bearbeitungslinien B bzw. Transfersystemen 4 vorgeordnet und/oder nachgeordnet sein, wie in Fig. 10 beispielhaft angedeutet. Zum Beispiel sind den beiden Bearbeitungslinien B4 und B5 bzw. den beiden Transfersystemen 4B und 4C die gemeinsam nutzbaren Bearbeitungseinrichtungen 3F und 3G - hier im Bereich der Abgabe 6B - nachgeordnet, die bedarfsweise bzw. wahlweise benutzt werden können. Weiter ist den Bearbeitungslinien B4, B5 zusätzlich zusammen mit den Bearbeitungslinien B1 bis B3 bzw. den Transfersystemen 4B, 4C zusätzlich zusammen mit dem Transfersystem 4A die gemeinsame Bearbeitungseinrichtung 3E im Bereich der Abgabe 6 nachgeordnet, die wiederum wahlweise bzw. bedarfsweise benutzt, aber auch ausgelassen bzw. umfahren werden kann.

Das Transportsystem 30 bildet vorzugsweise auch eine Ringanordnung und/oder ermöglicht vorzugsweise eine Zirkulation oder Kreisförderung K, wie in Fig. 10 angedeutet. Dies ist insbesondere einer Zwischenspeicherung der zu bearbeitenden Werkstücke bzw. Linsen 2 und/oder deren wahlweiser Zuförderung zu einer gewünschten Bearbeitungslinie B und/oder einem gewünschten Transfersystem 4 zuträglich, wobei ein einfacher und/oder kompakter Aufbau ermöglicht wird.

Die bevorzugte Kombination von mindestens einer Ringanordnung oder Zirkulation bzw. Kreisförderung K des (vorgeordneten) Transportsystems 30 mit mindestens einer (nachgeordneten) Ringanordnung oder Zirkulation bzw. Kreisförderung K einer Bearbeitungslinie B oder eines Transfersystems 4 stellt einen besonders bevorzugten, insbesondere unabhängig realisierbaren Aspekt der vorliegenden Erfindung dar. So lässt sich nämlich auf einfache Weise eine Zwischenspeicherung und/oder flexible Zuförderung zu verschiedenen Bearbeitungslinien B und/oder Bearbeitungseinrichtungen 3 realisieren.

Die Anlage 1 bzw. das Transportsystem 30 weist vorzugsweise eine Aufnahme 7 zur Aufnahme von zu bearbeitenden Werkstücken bzw. Linsen 2 bzw. damit versehenden Trägern 5 auf. Die Aufnahme 7 ist vorzugsweise über einen Einlass 28 o. dgl. an entsprechende andere Anlagen oder Einrichtungen angeschlossen oder anschließbar und/oder mit den Werkstücken beschickbar.

Die Anlage 1 oder Aufnahme 7 bzw. das Transportsystem 30 weist vorzugsweise einen Sensor 16 im Bereich des Einlasses 28 bzw. der Aufnahme 7 oder kurz danach auf, um neue zu bearbeitende Werkstücke erfassen zu können.

Optional kann die Anlage 1 bzw. Aufnahme 7 oder das Transportsystem 30 auch einen Speicher 29 zur insbesondere temporären Zwischenspeicherung von zu bearbeitenden Werkstücken bzw. Linsen 2 aufweisen.

Die neuen zu bearbeitenden und insbesondere bereits erfassten Werkstücke werden in das Transportsystem 30 bzw. die bevorzugte Zirkulation oder Kreisförderung K eingeschleust.

Die Zuförderung der zu bearbeitenden Werkstücke bzw. Linsen 2 bzw. damit versehenden Träger 5 zu der jeweiligen Bearbeitungslinie B bzw. dem jeweiligen Transfersystem 4, also insbesondere aus dem Transportsystem 30 über einen der Abzweige 31 und Zuläufe 32, erfolgt vorzugsweise in Abhängigkeit von Zuordnungsparametern und/oder entsprechend einer (vorherigen) Zuordnung Z, wie beispielhaft in Fig. 11 gezeigt. Insbesondere erfolgt die Zuordnung Z in Abhängigkeit von den Zuordnungsparametern.

Vorzugsweise gibt die Zuordnung Z beim Darstellungsbeispiel an, welches Werkstück (bei der Darstellung gemäß Fig. 11 beispielhaft identifiziert durch eine Werkstücknummer #1, #2, #3, usw.) welcher Bearbeitungslinie B zugeordnet wird und dementsprechend dieser zugefördert werden soll.

Die Zuordnung Z kann insbesondere durch eine Tabelle, eine Datenbank oder einen sonstigen Speicherwert oder Eintrag oder dergleichen realisiert werden.

Die Zuordnung Z kann einzelweise, paarweise oder gruppenweise erfolgen, wobei die üblicherweise als Paare herzustellenden Linsen 2 besonders bevorzugt auch als Paar der gleichen Bearbeitungslinie B zugeordnet und als zu bearbeitende Werkstücke zugefördert werden.

Die Zuordnung Z kann für die Werkstücke bzw. Linsen 2 einzelweise, paarweise oder zusammengefasst für mehrere oder alle Werkstücke bzw. Linsen 2, insbesondere für alle, die bereits erfasst wurden und einer der Bearbeitungslinien B noch zugefördert werden müssen und/oder sich noch im Transportsystem 30 befinden, bestimmt, bereitgehalten oder verwaltet werden, insbesondere von der Systemsteuerung 21.

Die Zuordnungsparameter berücksichtigen, bilden ab und/oder umfassen insbesondere Auftragsinformationen A, Produktionsdaten P und/oder Statusinformationen S, besonders bevorzugt den jeweiligen Bearbeitungsplan, erforderliche Bearbeitungsschritte, erforderliche Bearbeitungsgenauigkeiten, Anforderungen hinsichtlich der zu bearbeitenden Dimensionen und/oder des zu bearbeitenden Materials, Anforderungen bezüglich erforderlicher Werkzeuge, Wertelisten, Vorrang (Priorität) von Aufträgen, Bearbeitungen und/oder Werkstücken und/oder die Verfügbarkeit bzw. Befähigung einzelner Bearbeitungslinien B, Transfersysteme 4 und/oder Bearbeitungseinrichtungen 3. Beispielsweise kann eine Bearbeitungseinrichtung 3A einer Bearbeitungslinie B zum Blocken auf eine bestimmte Größe eingestellt sein und eine Bearbeitungseinrichtung 3A einer anderen Bearbeitungslinie B zum Blocken auf eine andere Größe eingerichtet sein. Die Werkstücke bzw. Linsen 2 werden dann unter Berücksichtigung solcher Anforderungen bzw. Zuordnungsparameter den geeigneten Bearbeitungslinien B zugeordnet und insbesondere auch zugefördert.

Die (erste) Zuordnung Z erfolgt vorzugsweise durch eine vorgegebene Verteilung oder Zufallsverteilung, durch entsprechende Anforderung einer Bearbeitungslinie B oder durch die Systemsteuerung 21, wobei die Zuordnung Z vorzugsweise mittels des Kontrollcenters 26 anzeigbar, überprüfbar und/oder änderbar ist.

Vorzugsweise beginnt das Transportsystem 30 bzw. die Anlage 1 mit der Zuförderung des Werkstücks zur jeweils zugeordneten Bearbeitungslinie B. Diese Zuförderung bedarf gerade bei größeren Anlagen 1 einer nicht zu vernachlässigbaren Zuförderungszeit.

Gemäß einem besonders bevorzugten, auch unabhängig realisierbaren Aspekt der vorliegenden Erfindung wird die Zuordnung Z bereits zugeordneter Werkstücke bzw. Linsen 2 bei Erfassung eines neuen Auftrags O oder Werkstücks (beispielsweise mittels des Sensors 16 an der Aufnahme 7) und/oder vor tatsächlicher Ausschleusung oder Übergabe eines Werkstücks von dem Transportsystem 30 an die zugeordnete Bearbeitungslinie B (insbesondere also vor dem jeweiligen Abzweig 31) überprüft, und zwar insbesondere unter Berücksichtigung der aktuellen Zuordnungsparameter, besonders bevorzugt unter Berücksichtigung von Änderungen der Zustandsparameter nach der letzten Zuordnung Z. Die Zuordnung Z wird dann gegebenenfalls angepasst bzw. durch eine Neuzuordnung N ersetzt.

Eine Änderung der Zuordnung Z bzw. Neuzuordnung N ist dadurch bedingt, dass eine für die Bearbeitung unersetzbar Bearbeitungseinrichtung 3 einer Bearbeitungslinie B oder eine Bearbeitungslinie B generell oder ein entsprechendes Transfersystem 4 temporär oder dauerhaft ausgefallen oder blockiert oder beispielsweise durch andere Werkstücke (über)belegt ist. Insbesondere können dann einzelne Werkstücke noch anderen Bearbeitungslinie B zugeordnet werden, wie durch die Neuzuordnung N in Fig. 11 beispielhaft veranschaulicht.

Beispielsweise wird hier das Werkstück #2 anstelle der Bearbeitungslinie B2 nun der Bearbeitungslinien B4 neu zugeordnet.

Vorzugsweise erfolgt die Überprüfung der Zuordnung Z bereits zugeordneter Werkstücke bzw. die Neuzuordnung N also innerhalb der Zuförderzeit für einzelne, mehrere oder alle Werkstücke.

Die vorschlagsgemäße Überprüfung und optionale Neuzuordnung N erfolgt vorzugsweise durch die Systemsteuerung 21 bzw. dort hinterlegte Algorithmen oder Makros.

Optional kann die Änderung und Neuzuordnung N auch durch das Kontrollcenter 26 angezeigt und/oder ggf. von einer Bedienperson überprüft bzw. korrigiert werden.

Die vorschlagsgemäße Überprüfung der Zuordnung Z bereits zugeordneter Werkstücke und optionale Neuzuordnung N gestattet eine Anpassung des Gesamtsystems bzw. der Anlage 1 an aktuelle Gegebenheiten, insbesondere bei sich ändernden Bedingungen und Anforderungen.

insbesondere kann die Überprüfung der Zuordnung Z und optionale Neuzuordnung N als adaptive Vorsteuerung angesehen bzw. eingesetzt werden.

Besonders hervorzuheben ist, dass eine Optimierung des Gesamtablaufs ermöglicht wird, wobei die Untereinheiten, hier die Bearbeitungslinien B, die Aufträge O bzw. Werkstücke vorzugsweise selbstständig abarbeiten bzw. bearbeiten, also insbesondere keine Zentralsteuerung erforderlich oder vorgesehen ist, die den kompletten Produktionsablauf in jeder Ebene steuert. Dies ist einem einfachen und/oder strukturierten Aufbau und/oder einer einfachen bzw. modularen Erweiterung der Anlage 1 zuträglich.

Bei der beschriebenen Zuordnung Z werden die Aufträge O bzw. Werkstücke den jeweiligen Bearbeitungslinien B zugeordnet. Dementsprechend kann hier auch der Begriff "Linienzuordnung" verwendet werden.

Die vorschlagsgemäße Zuordnung Z bzw. deren Überprüfung und optionale Neuzuordnung N kann alternativ oder zusätzlich auch bei der Zuordnung von Werkstücken zu einzelnen Bearbeitungseinrichtungen 3 einer Bearbeitungslinie B, also auf "Maschinenebene", erfolgen. Eine solche Zuordnung Z kann auch als "Maschinenzuordnung" bezeichnet werden und wird nachfolgend beispielhaft näher erläutert.

Die Zuordnung Z von einzelnen Werkstücken bzw. Linsen 2 zu einer bestimmten Bearbeitungseinrichtung 3 (für die nächste Bearbeitung) erfolgt insbesondere auf entsprechende Anforderung der jeweiligen Bearbeitungseinrichtung 3, wie bereits beschrieben. Hierbei können auch entsprechende Zuordnungsparameter, wie bereits oben beschrieben berücksichtigt werden. Damit ist dann eine (erste) Zuordnung Z erfolgt.

Die vorgenannte oder eine sonstige Zuordnung Z wird vorzugsweise immer in der Systemsteuerung 21 aktualisiert bzw. verwaltet. Optional kann auch eine Anzeige und gegebenenfalls Korrektur über das in Fig. 1 nicht dargestellte, vorzugsweise aber vorgesehene Kontrollcenter 26 erfolgen.

Die Zuordnung Z bereits zugeordneter Werkstücke wird vorzugsweise nach oder vor jeder Bearbeitung eines Werkstücks und/oder vor jeder Zuförderung eines Werkstücks zu der zugeordneten Bearbeitungseinrichtung 3, beispielsweise wenn eine Bearbeitungseinrichtung B gerade ein zugeordnetes Werkstück anfordert, überprüft, insbesondere unter Berücksichtigung der dann aktuellen Zuordnungsparameter, und optional geändert bzw. durch eine Neuzuordnung N ersetzt.

im Falle einer Neuzuordnung N könnte dann beispielsweise ein Werkstück, das bereits als nächstes formgebend in der Bearbeitungseinrichtung 3C bearbeitet werden soll, nicht mehr dieser Bearbeitungseinrichtung 3C zugeordnet werden, sondern stattdessen ein anderes Werkstück, das beispielsweise vorrangig bearbeitet werden soll. Alternativ oder zusätzlich könnte dann ggf. auf eine andere Bearbeitungseinrichtung 3C (sofern vorhanden) für das ursprüngliche Werkstück ausgewichen, also dieser neu zugeordnet werden.

Vorzugsweise erfolgt die Überprüfung der Zuordnung Z bereits zugeordneter Werkstücke und optionale Neuzuordnung N durch die Anlage 1 bzw. Bearbeitungslinien B bzw. Steuereinrichtung 21, die insbesondere entsprechend ausgebildet ist.

Optional kann die Änderung und Neuzuordnung N auch durch das Kontrollcenter 26 angezeigt und/oder ggf. von einer Bedienperson überprüft bzw. korrigiert werden.

Die vorschlagsgemäße Überprüfung der Zuordnung Z bereits zugeordneter Werkstücke und optionale Neuzuordnung N gestattet eine Anpassung des Gesamtsystems bzw. der Anlage 1 an aktuelle Gegebenheiten, insbesondere bei sich ändernden Bedingungen und Anforderungen.

Insbesondere kann die Überprüfung der Zuordnung Z und optionale Neuzuordnung N als adaptive Vorsteuerung angesehen bzw. eingesetzt werden.

Besonders hervorzuheben ist, dass eine Optimierung des Gesamtablaufs ermöglicht wird, wobei die Untereinheiten, hier die Bearbeitungslinien B, die Aufträge O bzw. Werkstücke vorzugsweise selbstständig abarbeiten bzw. bearbeiten, also insbesondere keine Zentralsteuerung erforderlich oder vorgesehen ist, die den kompletten Produktionsablauf in jeder Ebene steuert. Dies ist einem einfachen und/oder strukturierten Aufbau und/oder einer einfachen bzw. modularen Erweiterung der Anlage 1 zuträglich.

Optional können einzelne oder alle Bearbeitungslinien B und/oder Transfersysteme 4 eine (gemeinsame oder separate) Rückförderverbindung 27 zum Transportsystem 30 aufweisen, so dass bei Ausfall einer Bearbeitungslinie B eine Rückförderung bzw. Wiedereinschleusung von nicht oder nicht vollständig bearbeiteten Werkstücken bzw. Linsen 2 möglich ist, um diese dann anderen Bearbeitungslinien B zuzuordnen und zuzufördern. Eine solche optionale Rückförderverbindung 27 ist gestrichelt in Fig. 10 angedeutet. Alternativ oder zusätzlich kann eine solche Rückförderverbindung 27 auch beispielsweise zwischen einer separaten oder gemeinsamen Abgabe 6 und dem Transportsystem 30 vorgesehen sein.

Der optionale Speicher 29 und/oder das Transportsystem 30 kann gemäß einem besonders bevorzugten Aspekt auch dazu eingesetzt werden, um die zu bearbeitenden bzw. zu blockenden Linsen 2 für insbesondere unterschiedlich eingerichtete Bearbeitungseinrichtungen 3A zum Blocken vorzusortieren.

Beim Darstellungsbeispiel können die Blockeinrichtungen bzw. Bearbeitungseinrichtungen 3A der verschiedenen Bearbeitungslinien B - zumindest teilweise - unterschiedlich eingerichtet sein, beispielsweise mit Blockringen von unterschiedlichen Durchmessern oder für Blockverbindungen mit unterschiedlichem Durchmesser ausgerüstet oder eingerichtet sein. Die Linsen 2 werden dann je nach erforderlicher bzw. gewünschter Größe der Blockverbindung den jeweiligen Blockeinrichtungen bzw. Bearbeitungseinrichtungen 3A entsprechend zugeordnet und zugefördert.

Besonders bevorzugt kann eine besonders für das Blocken eingerichtete Bearbeitungslinien B6 gebildet werden, also verschiedene Bearbeitungseinrichtungen 3A zu einer Bearbeitungslinie B mit einem gemeinsamen Transfersystem 4 und/oder Transportsystem 30 zur wahlweisen Zuförderung zusammengefasst werden, wodurch insbesondere eine "Blocklinie" gebildet wird. Diese Blocklinie kann optional den Stacker bzw. Speicher 29 insbesondere zur Vorsortierung der Linsen 2 nach Größe bzw. gewünschtem Blockdurchmesser enthalten bzw. aufweisen. Eine solche Blocklinie B6 stellt auch einen unabhängig realisierbaren Aspekt dar.

Beispielhaft ist in Fig. 10 auch die Realisierung einer solchen Blocklinie bzw. Bearbeitungslinie B6 angedeutet. Diese Bearbeitungslinie B6 ist insbesondere nur zum Blocken oder sonstigen Verbinden der Linsen 2 mit nicht dargestellten Haltern bzw. Blockstücken ausgebildet und/oder den anderen Bearbeitungslinien B vorgeordnet. Die Blocklinie B6 kann vorzugsweise einen eigenen Stacker bzw. Speicher 29, wie gestrichelt in Fig. 10 angedeutet, insbesondere zur Vorsortierung der Linsen 2, besonders bevorzugt nach (erforderlicher bzw. passender oder gewünschter) Blockgröße aufweisen.

Unter dem Begriff "Blockgröße" ist vorzugsweise die Größe oder der Durchmesser der Verbindung zwischen Linse 2 und Halter bzw. Blockstück oder die hierfür erforderliche Fläche an der Linse 2 zu verstehen. Die Block- bzw. Bearbeitungseinrichtungen 3A der Bearbeitungslinie B6 sind vorzugsweise auf verschiedene Blockgrößen eingerichtet bzw. eingestellt, beispielsweise durch unterschiedlich große Blockringe oder dergleichen.

Die Linsen 2 werden vorzugsweise von der Systemsteuerung 21 entsprechend der passenden oder gewünschten Blockgröße den verschiedenen Bearbeitungseinrichtungen 3A zugeordnet. Die Zuförderung erfolgt mittels des Transfer- oder Transportsystems 4, 30 der Bearbeitungslinie B6 dann zu der jeweiligen Bearbeitungseinrichtung 3B entsprechend der Zuordnung Z.

Gemäß einem auch unabhängig realisierbaren Aspekt zeichnet sich ein vorschlagsgemäßes Verfahren und die vorschlagsgemäß Anlage 1 insbesondere durch die Bereitstellung oder Realisierung der beschriebenen Blocklinie B6 bzw. der Zuordnung Z von Linsen 2 gemäß Blockgröße zu verschiedenen Bearbeitungseinrichtungen 3A zum Blocken aus.

Die Blocklinie B6 kann auch beliebig mit anderen Bearbeitungslinien B zu einer Bearbeitungslinie B kombiniert werden.

Generell ist anzumerken, dass die Bearbeitungslinien B jeweils für sich und/oder zusammen mit anderen Bearbeitungslinien B eine bereits beschriebene Ringanordnung bzw. Zirkulation oder Kreisförderung K ermöglichen oder realisieren, insbesondere durch entsprechende Ausbildung des zugehörigen oder zugeordneten Transfer- oder Transportsystems 4, 30.

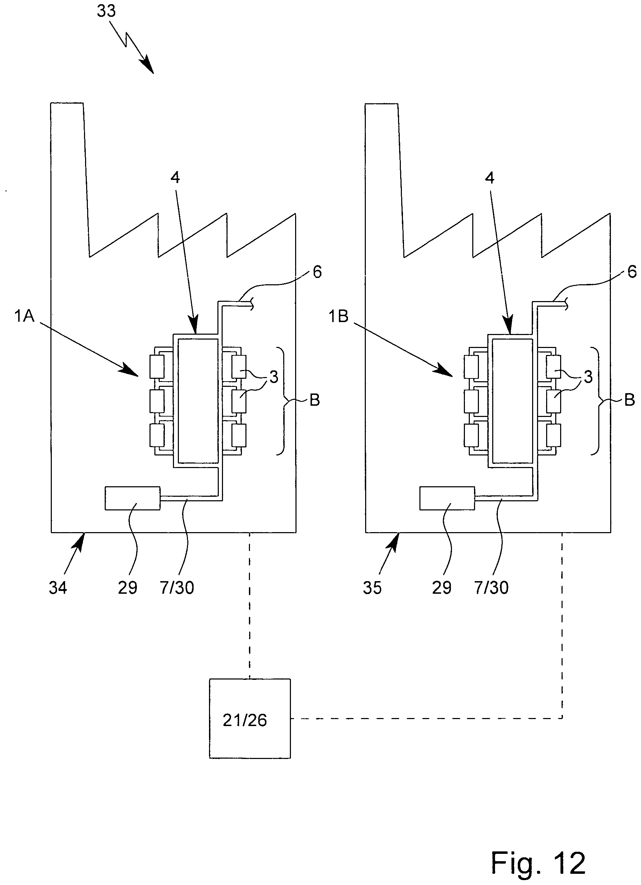

Eine weitere Ausführungsform der vorschlagsgemäßen Anlage 1 bzw. eines vorschlagsgemäßen Systems 33 zur Bearbeitung von vorzugsweise optischen Werkstücken bzw. Linsen 2, besonders bevorzugt Brillengläsern, wird nachfolgend anhand von Fig. 12 erläutert, wobei sich die nachfolgende Beschreibung auf wesentliche neue Aspekte beschränkt. Die bisherigen Ausführungen und Erläuterungen gelten also insbesondere entsprechend oder ergänzend, auch wenn diese nicht wiederholt werden.

Das System 33 umfasst eine erste Anlage 1A an einem ersten Standort 34 sowie eine zweite Anlage 1B an einem anderen, zweiten Standort 35. Insbesondere befinden sich die beiden Anlagen 1A und 1B in unterschiedlichen Gebäuden und/oder auf verschiedenen Firmengeländen bzw. in verschiedenen Städten, Staaten oder Kontinenten.

Die Anlagen 1A und 1B stellen jeweils eine Anlage 1 zur Bearbeitung von vorzugsweise optischen Werkstücken, insbesondere Linsen 2, im bereits beschriebenen Sinne dar, so dass die bisherigen Ausführungen und Erläuterungen in der allgemeinen Beschreibung und bezüglich Fig. 1 bis 11 vorzugsweise entsprechend oder ergänzend gelten. Insbesondere können die Anlagen 1A und 1B gemäß einem der vorangehend beschriebenen Ausführungsformen oder in ähnlicher Weise aufgebaut sein.

Die beiden Anlagen 1A und 1B können weitestgehend baugleich, bedarfsweise aber auch unterschiedlich aufgebaut sein.

Beim Darstellungsbeispiel sind lediglich einige wesentliche Komponenten der Anlagen 1A und 1B angedeutet.

Insbesondere weisen die Anlagen 1A und 1B jeweils einen Speicher 29 mit Werkstückrohlingen zur bedarfsweisen Bearbeitung auf. Diese Rohlinge bzw. Werkstücke sind aus Vereinfachungsgründen nicht dargestellt.

Die Anlage 1A, 1B weist jeweils vorzugsweise eine Aufnahme 7 bzw. ein Transportsystem 30 und/oder mindestens eine Bearbeitungslinie B mit entsprechenden Bearbeitungseinrichtungen 3 sowie vorzugsweise ein Transfersystem 4 und/oder eine Abgabe 6 auf.

Das System 33 weist vorzugsweise auch die Systemsteuerung 21 und optional das Kontrollcenter 26 auf, wie in Fig. 12 angedeutet.

Die Systemsteuerung 21 dient vorzugsweise der Verwaltung von Aufträgen O von herzustellenden bzw. zu bearbeitenden Werkstücken bzw. Linsen 2, besonders bevorzugt Brillengläsern.

Ein bevorzugter Aspekt liegt darin, dass die Systemsteuerung 21 die Aufträge O für die Bearbeitung der Werkstücke verwaltet und entsprechend einer Zuordnung Z wahlweise an die erste oder zweite Anlage 1A, 1B übermittelt. So kann eine besonders effiziente Bearbeitung und/oder optimale Auslastung der Anlagen 1A und 1B und damit des Gesamtsystems 33 erreicht werden.

Vorzugsweise werden keine Werkstückrohlinge zu den einzelnen Anlage 1A, 1B bzw. Standorten 34, 35 für einzelne Aufträge O geschickt, sondern nur die Aufträge O insbesondere elektronisch übermittelt und auf Werkstückrohlinge zurückgegriffen, die bei der jeweiligen Anlage 1A bzw. 1B bzw. dem jeweiligen Standort 34, 35 vorhanden sind, um diese dann vor Ort in gewünschter Weise entsprechend dem jeweiligen Auftrag O zu bearbeiten.

Die Werkstücke werden nach der Bearbeitung vorzugsweise an eine gewünschte Lieferadresse geschickt oder auf sonstige Weise verteilt.

Bei der Zuordnung Z der Aufträge O zu der jeweiligen Anlage 1A bzw. 1B werden vorzugsweise Zuordnungsparameter, wie bereits oben beschrieben, berücksichtigt. Die Zuordnungsparameter können alternativ oder zusätzlich auch die Verfügbarkeit, Auslastung und/oder Befähigung der Anlagen 1A und 1B bzw. einzelner Bearbeitungslinien B dieser Anlagen 1A, 1B umfassen, abbilden oder berücksichtigen.

Besonders bevorzugt erfolgt die Zuordnung Z wieder in der oder durch die Systemsteuerung 21, wobei diese Zuordnung Z vorzugsweise durch das optionale Kontrollcenter 26 angezeigt, überwacht und/oder bedarfsweise geändert werden kann.

Besonders bevorzugt wird die Zuordnung Z bereits zugeordneter Aufträge O bei Erfassung eines neuen Auftrags O und/oder jeweils vor dem tatsächlichen Beginn der Bearbeitung eines Werkstücks in der Anlage 1A oder 1B - insbesondere vor der Entnahme eines Linsenrohlings aus dem Speicher 29 als ersten Bearbeitungsschritt - überprüft, insbesondere unter Berücksichtigung der aktuellen Zuordnungsparameter bzw. zwischenzeitlich aufgetretener Änderungen der Zuordnungsparameter, und optional geändert bzw. durch eine Neuzuordnung N ersetzt. Beispielsweise werden dann bereits an eine Anlage 1A oder 1B übermittelte Aufträge O dort wieder gelöscht und an die andere Anlage 1B bzw. 1A übermittelt, also "umgeroutet".

Die Überprüfung der Zuordnung Z bereits zugeordneter Aufträge O und die optionale Änderung bzw. Neuzuordnung N erfolgt vorzugsweise durch das System 33 bzw. deren Systemsteuerung 21, die hierzu insbesondere entsprechend ausgebildet sind.

Optional kann die Änderung und Neuzuordnung N auch durch das Kontrollcenter 26 angezeigt und/oder ggf. überprüft bzw. korrigiert werden, beispielsweise von einer Bedienperson.

Die vorschlagsgemäße Überprüfung der Zuordnung Z bereits zugeordneter Aufträge O und optionale Neuzuordnung N gestattet eine Anpassung des Gesamtsystems 33 an aktuelle Gegebenheiten, insbesondere bei sich ändernden Bedingungen und Anforderungen.

Insbesondere kann die Überprüfung der Zuordnung Z und optionale Neuzuordnung N der Aufträge O als adaptive Vorsteuerung angesehen bzw. eingesetzt werden.

Besonders hervorzuheben ist, dass eine Optimierung des Gesamtablaufs ermöglicht wird, wobei die Untereinheiten, hier die Anlagen 1A und 1B die Aufträge O vorzugsweise selbstständig abarbeiten, also insbesondere keine Zentralsteuerung erforderlich oder vorgesehen ist, die den kompletten Produktionsablauf in jeder Ebene steuert. Dies ist einem einfachen und/oder strukturierten Aufbau und/oder einer einfachen bzw. modularen Erweiterung des Systems 33 zuträglich.

Das System 33 kann auch mehrere Anlagen 1 an einem Standort 34 oder 35 und/oder über die beiden Standorte 34 und 35 hinaus mindestens einen weiteren Standort (nicht dargestellt) umfassen.

Das System 33 kann optional auch eine Systemsteuerung 21 für jede Anlage 1A, 1B und/oder jeden Standort 34, 35 umfassen, wobei die Systemsteuerungen dann vorzugsweise derart miteinander kommunizieren und/oder vernetzt sind, dass hierdurch insgesamt eine Systemsteuerung 21 im vorschlagsgemäßen Sinne gebildet wird.

Die Systemsteuerung 21 ist vorzugsweise zentral bzw. an einem der beiden Standorte 34 oder 35 angeordnet und/oder auf mehrere Standorte oder sonstige Orte verteilt. Beispielsweise kann es sich um einen Server handeln, auf dem entsprechende Programme oder Makros laufen und auf den von der Ferne zugegriffen werden kann.

Generell kann die Systemsteuerung 21 bedarfsweise auch ortsunabhängig von der jeweiligen Anlage 1 bzw. den Anlagen 1A, 1B realisiert und/oder gesteuert werden. Gleiches gilt vorzugsweise auch für das optionale Kontrollcenter 26.

Die vorschlagsgemäße Zuordnung Z von Aufträgen O zu unterschiedlichen Anlagen 1A, 1B bzw. Standorten 34, 35 und entsprechende Übermittlung kann auch als "Anlagenzuordnung" bezeichnet werden.

Die bevorzugte Überprüfung und optionale Änderung bzw. Neuzuordnung der Anlagenzuordnung stellt einen besonders bevorzugten, auch unabhängig realisierbaren Aspekt dar.

Besonders bevorzugt können die Maschinenzuordnung, Linienzuordnung und Anlagenzuordnung auch beliebig miteinander kombiniert und/oder von der selben Systemsteuerung 21 oder unterschiedlichen Systemsteuerungen 21 realisiert bzw. vorgenommen und/oder überprüft bzw. geändert oder neu zugeordnet werden.

Insbesondere werden ein Verfahren, eine Anlage 1 und ein System 33 zur Bearbeitung optischer Werkstücke vorgeschlagen. Die Werkstücke werden einzelnen Bearbeitungseinrichtungen 3 oder Bearbeitungslinien 8 entsprechend einer Zuordnung Z zugefördert. Die jeweilige Zuordnung Z berücksichtigt vorzugsweise Zuordnungsparameter, wie die Verfügbarkeit und Befähigung der Bearbeitungseinrichtungen 3 bzw. Bearbeitungslinien B. Die bereits erfolgte Zuordnung Z wird vor der tatsächlichen bzw. endgültigen Zuförderung und/oder bei Änderung der Zuordnungsparameter überprüft und optional unter Berücksichtigung der aktuellen Zuordnungsparameter entsprechend geändert, um sich aktuellen Gegebenheiten anzupassen. Alternativ oder zusätzlich werden Aufträge O zur Werkstückbearbeitung an den Bearbeitungsanlagen 1A, 1B an unterschiedlichen Standorten 34, 35 in Abhängigkeit von entsprechenden Zuordnungsparametern übermittelt. Optional erfolgt eine Überprüfung und gegebenenfalls Änderung der Zuordnung Z bei Erfassung neuer Aufträge O bzw. wesentlicher Änderungen der Zuordnungsparameter. Dementsprechend wird eine besonders effiziente Bearbeitung ermöglicht.

Weiter ermöglichen die vorschlagsgemäße Anlage 1, das vorschlagsgemäße System 33 und die vorschlagsgemäßen Verfahren eine besonders gute Ausnutzung von verfügbaren Werkzeugen, Bearbeitungseinrichtungen 3, Bearbeitungslinien B, Anlagen 1 oder sonstigen Betriebsmitteln.

Die Systemsteuerung 21 bzw. das Kontrollcenter 26 und/oder die Steuereinrichtung 12 wird insbesondere durch eine speicherprogrammierbare Steuerung und/oder eine HMI (Mensch-Maschine-Schnittstelle) realisiert oder damit versehen.

Einzelne Aspekte und Merkmale der beschriebenen Anlage 1 und Systeme 33 sowie der beschriebenen Abläufe, Verfahren und verschiedenen Ausführungsbeispiele können auch unabhängig voneinander, aber auch in beliebiger Kombination realisiert werden.

### Bezugszeichenliste

- 1: Anlage (generell)
- 1A: erste Anlage
- 1B: zweite Anlage
- 2: Linse
- 3: Bearbeitungseinrichtung (generell)
- 3A: Bearbeitungseinrichtung zum Blocken
- 3B: Bearbeitungseinrichtung zum Zwischenlagern
- 3C: Bearbeitungseinrichtung zum formgebenden Bearbeiten
- 3D: Bearbeitungseinrichtung zum Polieren
- 3E: Bearbeitungseinrichtung zum Prüfen
- 3F: Bearbeitungseinrichtung zum Markieren
- 3G: Bearbeitungseinrichtung zum Beschichten
- 4: Transfersystem
- 5: Linsenträger
- 5A: Kodierung
- 6: Abgabe
- 7: Aufnahme
- 8: Fördereinrichtung (Bearbeitungseinrichtung)
- 9: Transfereinrichtung
- 10, 10', 10": Fördereinrichtung
- 10A: Gurt
- 11: Wechseleinrichtung
- 12: Steuereinrichtung
- 13: Bussystem
- 14: Fördereinrichtung (Längsförderung, Transfereinrichtung)
- 14A: Gurt
- 14B: Antrieb
- 15: Fördereinrichtung (Querförderung)
- 15A: Gurt
- 15B: Antrieb
- 15C: Hubtisch
- 15D: Gurt
- 15E: Anschlag
- 16: Sensor
- 17: Bedienpult
- 18: Stoppeinrichtung
- 19: Aufnahmebereich
- 20: Maschinensteuerung
- 21: Systemsteuerung
- 22: Verbindungseinrichtung
- 23: Fördereinrichtung (Kurvenförderung)
- 24: Stoppbereich
- 25: weiteres Bussystem
- 26: Kontrollcenter
- 27: Rückförderverbindung
- 28: Einlass
- 29: Speicher
- 30: Transportsystem
- 31: Abzweig
- 32: Zulauf (generell)
- 33: System
- 34: erster Standort
- 35: zweiter Standort

- A: Auftragsinformation
- B: Bearbeitungslinie (generell)
- F: Förderrichtung (generell)
- F1: erste Förderrichtung
- F2: zweite Förderrichtung
- F3: dritte Förderrichtung
- FR: Rückförderrichtung
- I: Information
- K: Kreisförderung
- N: Neuzuordnung
- O: Auftrag
- P: Produktionsdaten
- S: Statusinformation
- T: Transportspur (generell)
- T1: erste Transportspur
- T2: zweite Transportspur
- T3: dritte Transportspur
- Z: Zuordnung

## Patentansprüche

1. Verfahren zur Bearbeitung optischer Werkstücke, insbesondere Linsen (2) bzw. Brillengläser,
wobei die Werkstücke mittels eines Transportsystems (30) zu Bearbeitungslinien (B) entsprechend einer Zuordnung (Z) zugefördert werden,
**dadurch gekennzeichnet,**
**dass** die Zuordnung (Z) bereits zugeordneter Werkstücke bei Erfassung eines neuen, zu bearbeitenden Werkstücks oder Auftrags (O) und/oder jeweils vor tatsächlicher Übergabe eines Werkstücks von dem Transportsystem (30) an die zugeordnete Bearbeitungslinie (B) überprüft und wenn eine für die Bearbeitung unersetzbare Bearbeitungseinrichtung (3) einer Bearbeitungslinie (B) oder eine Bearbeitungslinie (B) generell oder ein entsprechendes Transfersystem (4) temporär oder dauerhaft ausgefallen oder blockiert oder beispielsweise durch andere Werkstücke belegt oder überbelegt ist, durch eine Neuzuordnung (N) ersetzt wird.

2. Verfahren nach Anspruch 1, **dadurch gekennzeichnet, dass** das Transportsystem (30) die Werkstücke bis zur tatsächlichen Übergabe an eine Bearbeitungslinie (B) zirkuliert.

3. Verfahren nach Anspruch 1 oder 2, **dadurch gekennzeichnet, dass** Aufträge (O) für die Bearbeitung der Werkstücke von einer Systemsteuerung (21) verwaltet und entsprechend einer Zuordnung (Z) an eine erste Anlage (1A) mit mindestens einer Bearbeitungslinie (B) an einem ersten Standort (34) übermittelt werden, wobei Aufträge (O) für die Bearbeitung der Werkstücke von der Systemsteuerung (21) entsprechend der Zuordnung (Z) wahlweise an eine zweite Anlage (1B) mit mindestens einer Bearbeitungslinie (B) an einem zweiten Standort (35) übermittelt werden.

4. Verfahren nach einem der voranstehenden Ansprüche, **dadurch gekennzeichnet, dass** die Zuordnung oder Neuzuordnung (N) in Abhängigkeit von Zuordnungsparametern erfolgt.

5. Verfahren nach Anspruch 4, **dadurch gekennzeichnet, dass** die Zuordnungsparameter den Status, die Auslastung, Verfügbarkeit und/oder Befähigung von Bearbeitungseinrichtungen (3), Bearbeitungslinien (B) und/oder deren Werkzeugen umfassen und/oder dass die Zuordnungsparameter die Anzahl bzw. geschätzte Bearbeitungsdauer von den der Bearbeitungslinie(n) (B) und/oder Bearbeitungseinrichtung(en) (3) zugeordneten oder zugeförderten Werkstücken umfassen.

6. Verfahren nach einem der voranstehenden Ansprüche, **dadurch gekennzeichnet, dass** eine Systemsteuerung (21) Bearbeitungsstati für die zu bearbeitenden Werkstücke verwaltet, vorzugsweise wobei eine bzw. jede Bearbeitungseinrichtung (3) nach beendeter Bearbeitung den neuen Bearbeitungszustand der bearbeiteten Werkstücke der Systemsteuerung (21) mitteilt.

7. Verfahren nach einem der voranstehenden Ansprüche, **dadurch gekennzeichnet, dass** eine bzw. jede Bearbeitungseinrichtung (3) nach einer erfolgten Bearbeitung das Werkstück wieder an ein Transfersystem (4) abgibt und ein neues Werkstück selbsttätig anfordert und/oder dass die Werkstücke bedarfsweise an jeder beliebigen Bearbeitungseinrichtung (3) über eine parallele Transportspur (T2, T3) vorbei gefördert werden.

8. Anlage (1) zur Bearbeitung optischer Werkstücke, insbesondere Linsen (2) bzw. Brillengläser,
mit einem Transportsystem (30), mehreren daran angeschlossenen Bearbeitungslinien (B) und einer Systemsteuerung (21),
wobei die Bearbeitungslinien (B) jeweils mehrere Bearbeitungseinrichtungen (3) zur vorzugsweise unabhängigen Bearbeitung der Werkstücke aufweisen,
wobei die Systemsteuerung (21) zur Zuordnung von Werkstücken jeweils zu einer Bearbeitungslinie (B) in Abhängigkeit von Zuordnungsparametern ausgebildet ist,
wobei das Transportsystem (30) zur Zuförderung der Werkstücke zu den Bearbeitungslinien (B) entsprechend der Zuordnung (Z) ausgebildet ist,
**dadurch gekennzeichnet,**
**dass** die Systemsteuerung (21) derart ausgebildet ist, dass die Zuordnung (Z) bereits zugeordneter Werkstücke bei Erfassung eines neuen, zu bearbeitenden Werkstücks oder Auftrags (O) und/oder jeweils vor tatsächlicher Übergabe eines Werkstücks an die zugeordnete Bearbeitungslinie (B) überprüft wenn eine für die Bearbeitung unersetzbare Bearbeitungseinrichtung (3) einer Bearbeitungslinie (B) oder eine Bearbeitungslinie (B) generell oder ein entsprechendes Transfersystem (4) temporär oder dauerhaft ausgefallen oder blockiert oder beispielsweise durch andere Werkstücke belegt oder überbelegt ist, durch eine Neuzuordnung (N) ersetzt wird.

9. Anlage nach Anspruch 8, **dadurch gekennzeichnet, dass** das Transportsystem (30) zur Zirkulation der Werkstücke vor der Zuförderung zu einer der Bearbeitungslinien (B) ausgebildet ist.

10. Anlage nach Anspruch 8 oder 9, **dadurch gekennzeichnet, dass** die Zuordnungsparameter den Status bzw. die Verfügbarkeit und/oder die Befähigung von Bearbeitungseinrichtungen (3), Bearbeitungslinien (B) und/oder deren Werkzeugen umfassen und/oder dass die Zuordnungsparameter die Anzahl bzw. geschätzte Bearbeitungsdauer von den Bearbeitungslinien (B) und/oder Bearbeitungseinrichtungen (3) zugeordneten oder zugeförderten Werkstücken umfassen.

11. Anlage nach einem der Ansprüche 8 bis 10, **dadurch gekennzeichnet, dass** die Systemsteuerung (21) die Bearbeitungspläne und Bearbeitungsstati für die Werkstücke bereithält und/oder dass nach erfolgter Bearbeitung in der Bearbeitungseinrichtung (3) der neue Bearbeitungsstatus der Systemsteuerung (21) mitgeteilt wird und die Bearbeitungseinrichtung (3) das bearbeitete Werkstück wieder an das Transfersystem (4) zum Freifahren der Bearbeitungseinrichtung (3) übergibt.

12. System (33) zur Bearbeitung optischer Werkstücke, insbesondere Linsen (2) bzw. Brillengläser,
mit einer ersten Anlage (1A) mit mindestens einer Bearbeitungslinie (B) an einem ersten Standort (34),
wobei das System (33) eine zweite Anlage (1B) mit mindestens einer Bearbeitungslinie (B) an einem zweiten Standort (35) aufweist, und
wobei das System (33) eine Systemsteuerung (21) zur Verwaltung von Aufträgen (O) für die Bearbeitung der Werkstücke und Übermittlung von Aufträgen (O) an die Anlagen (1A, 1B) entsprechend einer Zuordnung (Z) aufweist, und
dass die Systemsteuerung (21) zur Überprüfung bereits zugeordneter Aufträge (O) bei Erfassung eines neuen Auftrags (O) und/oder jeweils vor tatsächlichem Beginn der Bearbeitung eines Werkstücks ausgebildet ist und dazu ausgebildet ist, die Zuordnung (Z), wenn eine für die Bearbeitung unersetzbare Bearbeitungseinrichtung (3) einer Bearbeitungslinie (B) oder eine Bearbeitungslinie (B) generell oder ein entsprechendes Transfersystem (4) temporär oder dauerhaft ausgefallen oder blockiert oder beispielsweise durch andere Werkstücke belegt oder überbelegt ist, durch eine Neuzuordnung (N) zu ersetzen.

13. System nach Anspruch 12, **dadurch gekennzeichnet, dass** die Zuordnung (Z) oder Neuzuordnung (N) in Abhängigkeit von Zuordnungsparametern erfolgt.

14. System nach Anspruch 13, **dadurch gekennzeichnet, dass** die Zuordnungsparameter den Status bzw. die Auslastung, Verfügbarkeit und/oder Befähigung der Anlagen (1A, 1B) und/oder von Bearbeitungseinrichtungen (3), Bearbeitungslinien (B) oder deren Werkzeugen umfassen und/oder dass die Zuordnungsparameter die Anzahl bzw. geschätzte Bearbeitungsdauer von den Anlagen (1A, 1B), Bearbeitungslinien (B) und/oder Bearbeitungseinrichtungen (3) zugeordneten Aufträgen (O) bzw. Werkstücken umfassen.

15. System nach einem der Ansprüche 12 bis 14, **dadurch gekennzeichnet, dass** die Zuordnungsparameter die Verfügbarkeit von Werkstückrohlingen bei den Anlagen (1A, 1B) bzw. an den jeweiligen Standorten (34, 35) berücksichtigen bzw. umfassen und/oder die Systemsteuerung (21) die Bearbeitungspläne und Bearbeitungsstati für die Werkstücke bereithält.

## Claims

1. Method for processing optical workpieces, in particular lenses (2) or spectacle lenses,
wherein the workpieces are conveyed by means of a transport system (30) to processing lines (B) according to an assignment (Z),
**characterised in that**
the assignment (Z) of already assigned workpieces is checked upon detection of a new workpiece or order (O) to be processed and/or in each case before actual transfer of a workpiece from the transport system (30) to the assigned processing line (B), and if a processing device (3) of a processing line (B) which is irreplaceable for the processing or a processing line (B) in general or a corresponding transfer system (4), temporarily or permanently, has failed or is blocked or is occupied or overoccupied, for example by other workpieces, is replaced by a new assignment (N).

2. Method according to claim 1, **characterised in that** the transport system (30) circulates the workpieces until the actual transfer to a processing line (B).

3. Method according to claim 1 or 2, **characterised in that** orders (O) for the processing of the workpieces are managed by a system controller (21) and are transmitted according to an assignment (Z) to a first installation (1A) with at least one processing line (B) at a first location (34), wherein orders (O) for the processing of the workpieces are selectively transmitted by the system controller (21) according to the assignment (Z) to a second installation (1B) with at least one processing line (B) at a second location (35).

4. Method according to one of the preceding claims, **characterised in that** the assignment or new assignment (N) takes place as a function of assignment parameters.

5. Method according to claim 4, **characterised in that** the assignment parameters comprise the status, the utilization, availability and/or capability of processing devices (3), processing lines (B) and/or their tools and/or **in that** the assignment parameters comprise the number and/or estimated processing duration of the workpieces assigned or conveyed to the processing line(s) (B) and/or processing device(s) (3).

6. Method according to one of the preceding claims, **characterised in that** a system controller (21) manages processing states for the workpieces to be processed, preferably wherein one or each processing device (3), after processing has ended, communicates the new processing state of the processed workpieces to the system controller (21).

7. Method according to one of the preceding claims, **characterised in that** one or each processing device (3), after processing has taken place, delivers the workpiece back to a transfer system (4) and automatically requests a new workpiece and/or **in that** the workpieces are conveyed as needed past any desired processing device (3) via a parallel transport track (T2, T3).

8. Installation (1) for processing optical workpieces, in particular lenses (2) or spectacle lenses,
with a transport system (30), a plurality of processing lines (B) connected thereto and a system controller (21),
wherein the processing lines (B) each have a plurality of processing devices (3) for preferably independent processing of the workpieces,
wherein the system controller (21) is designed for the assignment of workpieces in each case to a processing line (B) as a function of assignment parameters,
wherein the transport system (30) is designed for conveying the workpieces to the processing lines (B) according to the assignment (Z),
**characterised in that**
the system controller (21) is designed such that the assignment (Z) of already assigned workpieces is checked upon detection of a new workpiece or order (O) to be processed and/or in each case before actual transfer of a workpiece to the assigned processing line (B), and if a processing device (3) of a processing line (B) which is irreplaceable for the processing or a processing line (B) in general or a corresponding transfer system (4), temporarily or permanently, has failed or is blocked or is occupied or overoccupied, for example by other workpieces, is replaced by a new assignment (N).

9. Installation according to claim 8, **characterised in that** the transport system (30) is designed for the circulation of the workpieces before the conveying to one of the processing lines (B).

10. Installation according to claim 8 or 9, **characterised in that** the assignment parameters comprise the status and/or the availability and/or the capability of processing devices (3), processing lines (B) and/or their tools and/or **in that** the assignment parameters comprise the number and/or estimated processing duration of workpieces assigned or conveyed to the processing lines (B) and/or processing devices (3).

11. Installation according to one of claims 8 to 10, **characterised in that** the system controller (21) keeps the processing plans and processing states available for the workpieces and/or **in that**, after processing has taken place in the processing device (3), the new processing status is communicated to the system controller (21) and the processing device (3) transfers the processed workpiece back to the transfer system (4) for freeing the processing device (3).

12. System (33) for processing optical workpieces, in particular lenses (2) or spectacle lenses,
with a first installation (1A) with at least one processing line (B) at a first location (34),
wherein the system (33) has a second installation (1B) with at least one processing line (B) at a second location (35), and
wherein the system (33) has a system controller (21) for the management of orders (O) for the processing of the workpieces and transmission of orders (O) to the installations (1A, 1B) according to an assignment (Z), and
the system controller (21) is designed for checking already assigned orders (O) upon detection of a new order (O) and/or in each case before actual start of the processing of a workpiece, and is designed to check the assignment (Z) if a processing device (3) of a processing line (B) which is irreplaceable for the processing or a processing line (B) in general or a corresponding transfer system (4), temporarily or permanently, has failed or is blocked or is occupied or overoccupied, for example by other workpieces, by a new assignment (N).

13. System according to claim 12, **characterised in that** the assignment (Z) or new assignment (N) takes place as a function of assignment parameters.

14. System according to claim 13, **characterised in that** the assignment parameters comprise the status and/or the utilization, availability and/or capability of the installations (1A, 1B) and/or of processing devices (3), processing lines (B) or their tools and/or **in that** the assignment parameters comprise the number and/or estimated processing duration of orders (O) or workpieces assigned to the installations (1A, 1B), processing lines (B) and/or processing devices (3).

15. System according to one of claims 12 to 14, **characterised in that** the assignment parameters take account of or comprise the availability of workpiece blanks in the installations (1A, 1B) and/or at the respective locations (34, 35) and/or the system controller (21) keeps the processing plans and processing states available for the workpieces.

## Revendications

1. Procédé d'usinage de pièces optiques, en particulier de lentilles (2) ou de verres de lunettes,
dans lequel les pièces sont acheminées au moyen d'un système de transport (30) vers des lignes d'usinage (B) conformément à une affectation (Z),
**caractérisé en ce que**
l'affectation (Z) de pièces déjà affectées est vérifiée lors de la détection d'une nouvelle pièce ou d'une nouvelle commande (O) à usiner et/ou à chaque fois avant le transfert effectif d'une pièce du système de transport (30) à la ligne d'usinage (B) affectée et, lorsqu'un dispositif d'usinage (3) non remplaçable pour l'usinage d'une ligne d'usinage (B) ou d'une ligne d'usinage (B) en général ou d'un système de transfert (4) correspondant est défaillant ou bloqué temporairement ou durablement ou est par exemple occupé ou suroccupé par d'autres pièces, est remplacé par une nouvelle affectation (N).

2. Procédé selon la revendication 1, **caractérisé en ce que** le système de transport (30) fait circuler les pièces jusqu'au transfert effectif à une ligne d'usinage (B).

3. Procédé selon la revendication 1 ou 2, **caractérisé en ce que** des commandes (O) pour l'usinage des pièces sont gérées par une commande de système (21) et sont transmises conformément à une affectation (Z) à une première installation (1A) avec au moins une ligne d'usinage (B) à un premier emplacement (34), dans lequel des commandes (O) pour l'usinage des pièces sont transmises par la commande de système (21) conformément à l'affectation (Z) au choix à une deuxième installation (1B) avec au moins une ligne d'usinage (B) à un deuxième emplacement (35).

4. Procédé selon l'une quelconque des revendications précédentes, **caractérisé en ce que** l'affectation ou la réaffectation (N) a lieu en fonction de paramètres d'affectation.

5. Procédé selon la revendication 4, **caractérisé en ce que** les paramètres d'affectation comprennent l'état, la charge, la disponibilité et/ou la capacité de dispositifs d'usinage (3), de lignes d'usinage (B) et/ou de leurs outils et/ou **en ce que** les paramètres d'affectation comprennent le nombre ou la durée d'usinage estimée des pièces affectées ou acheminées à la ou aux lignes d'usinage (B) et/ou au(x) dispositif(s) d'usinage (3).

6. Procédé selon l'une quelconque des revendications précédentes, **caractérisé en ce qu'**une commande de système (21) gère des états d'usinage pour les pièces à usiner, de préférence dans lequel un ou chaque dispositif d'usinage (3), une fois l'usinage terminé, communique le nouvel état d'usinage des pièces usinées à la commande de système (21).

7. Procédé selon l'une quelconque des revendications précédentes, **caractérisé en ce qu'**un ou chaque dispositif d'usinage (3), une fois l'usinage terminé, retransmet la pièce à un système de transfert (4) et demande automatiquement une nouvelle pièce et/ou **en ce que** les pièces sont acheminées, si nécessaire, devant n'importe quel dispositif d'usinage (3) sur une voie de transport parallèle (T2, T3).

8. Installation (1) d'usinage de pièces optiques, en particulier de lentilles (2) ou de verres de lunettes,
comprenant un système de transport (30), plusieurs lignes d'usinage (B) raccordées à celui-ci et une commande de système (21),
dans laquelle les lignes d'usinage (B) présentent respectivement plusieurs dispositifs d'usinage (3) pour l'usinage de préférence indépendant des pièces,
dans laquelle la commande de système (21) est réalisée pour l'affectation de pièces à chaque fois à une ligne d'usinage (B) en fonction de paramètres d'affectation,
dans laquelle le système de transport (30) est réalisé pour l'acheminement des pièces vers les lignes d'usinage (B) conformément à l'affectation (Z),
**caractérisée en ce que**
la commande de système (21) est réalisée de telle sorte que l'affectation (Z) de pièces déjà affectées est vérifiée lors de la détection d'une nouvelle pièce ou d'une nouvelle commande (O) à usiner et/ou à chaque fois avant le transfert effectif d'une pièce à la ligne d'usinage (B) affectée et, lorsqu'un dispositif d'usinage (3) non remplaçable pour l'usinage d'une ligne d'usinage (B) ou d'une ligne d'usinage (B) en général ou d'un système de transfert (4) correspondant est défaillant ou bloqué temporairement ou durablement ou est par exemple occupé ou suroccupé par d'autres pièces, est remplacé par une nouvelle affectation (N).

9. Installation selon la revendication 8, **caractérisée en ce que** le système de transport (30) est réalisé pour la circulation des pièces avant l'acheminement vers l'une des lignes d'usinage (B).

10. Installation selon la revendication 8 ou 9, **caractérisée en ce que** les paramètres d'affectation comprennent l'état ou la disponibilité et/ou la capacité de dispositifs d'usinage (3), de lignes d'usinage (B) et/ou de leurs outils et/ou **en ce que** les paramètres d'affectation comprennent le nombre ou la durée d'usinage estimée des pièces affectées ou acheminées aux lignes d'usinage (B) et/ou aux dispositifs d'usinage (3).

11. Installation selon l'une quelconque des revendications 8 à 10, **caractérisée en ce que** la commande de système (21) tient à disposition les plans d'usinage et les états d'usinage pour les pièces et/ou **en ce que**, une fois l'usinage terminé, le nouvel état d'usinage est communiqué à la commande de système (21) dans le dispositif d'usinage (3) et le dispositif d'usinage (3) retransmet la pièce usinée au système de transfert (4) pour la libération du dispositif d'usinage (3).

12. Système (33) d'usinage de pièces optiques, en particulier de lentilles (2) ou de verres de lunettes,
comprenant une première installation (1A) avec au moins une ligne d'usinage (B) à un premier emplacement (34),
dans lequel le système (33) présente une deuxième installation (1B) avec au moins une ligne d'usinage (B) à un deuxième emplacement (35), et
dans lequel le système (33) présente une commande de système (21) pour la gestion de commandes (O) pour l'usinage des pièces et la transmission de commandes (O) aux installations (1A, 1B) conformément à une affectation (Z), et
la commande de système (21) est réalisée pour la vérification de commandes (O) déjà affectées lors de la détection d'une nouvelle commande (O) et/ou à chaque fois avant le début effectif de l'usinage d'une pièce et est réalisée pour que l'affectation (Z)
lorsque un dispositif d'usinage (3) non remplaçable pour l'usinage d'une ligne d'usinage (B) ou d'une ligne d'usinage (B) en général ou d'un système de transfert (4) correspondant est défaillant ou bloqué temporairement ou durablement ou est par exemple occupé ou suroccupé par d'autres pièces, soit remplacée par une nouvelle affectation (N).

13. Système selon la revendication 12, **caractérisé en ce que** l'affectation (Z) ou la nouvelle affectation (N) a lieu en fonction de paramètres d'affectation.

14. Système selon la revendication 13, **caractérisé en ce que** les paramètres d'affectation comprennent l'état ou la charge, la disponibilité et/ou la capacité des installations (1A, 1B) et/ou de dispositifs d'usinage (3), de lignes d'usinage (B) ou de leurs outils et/ou **en ce que** les paramètres d'affectation comprennent le nombre ou la durée d'usinage estimée de commandes (O) ou de pièces affectées aux installations (1A, 1B), aux lignes d'usinage (B) et/ou aux dispositifs d'usinage (3).

15. Système selon l'une quelconque des revendications 12 à 14, **caractérisé en ce que** les paramètres d'affectation prennent en compte ou comprennent la disponibilité d'ébauches de pièces dans les installations (1A, 1B) ou aux emplacements respectifs (34, 35) et/ou la commande de système (21) tient à disposition les plans d'usinage et les états d'usinage pour les pièces.
